(19) Europäisches Patentamt
European Patent Office
Office européen des brevets

(11) **EP 2 506 062 A2**

(12) **EUROPEAN PATENT APPLICATION**

(43) Date of publication:
**03.10.2012 Bulletin 2012/40**

(51) Int Cl.:
***G02B 27/22*** *(2006.01)*  ***H04N 13/02*** *(2006.01)*

(21) Application number: **12155658.3**

(22) Date of filing: **15.02.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.03.2011 JP 2011081306**

(71) Applicant: **Sony Corporation Tokyo 108-0075 (JP)**

(72) Inventor: **Nagano, Hidetoshi Minato-ku, Tokyo 108-0075 (JP)**

(74) Representative: **Turner, James Arthur D Young & Co LLP 120 Holborn London EC1N 2DY (GB)**

(54) **Stereoscopic image pickup apparatus and stereoscopic image pickup method**

(57)    A stereoscopic image pickup apparatus includes an objective optical system of an afocal optical system, which includes two or more lens groups that form a subject as a real image or a virtual image and that are disposed on the same optical axis; a plurality of image pickup optical systems that allow a plurality of subject light beams, which are emitted from different paths of the objective optical system, to be imaged as independent images, respectively, by a plurality of independent lens groups; and a plurality of image pickup devices that are provided in correspondence with the plurality of image pickup optical systems, and that convert the images, which are imaged by the plurality of image pickup optical systems, to image signals.

## FIG. 14

**Description**

The present disclosure relates to a stereoscopic image pickup apparatus and a stereoscopic image pickup method.

In a two-eye type stereoscopic image pickup apparatus in the related art, a right image and a left image of a subject, which is an object to be photographed, are photographed by cameras disposed in two direction of left and right directions, and thereby a two-eye stereoscopic image is obtained. At this time, the distance between the left and right cameras (the distance between image pickup lenses) (a based line length, IAD (InterAxial Distance)), and a convergence have a great effect on a stereoscopic effect of the obtained two-eye stereoscopic image or a comfortable parallax range. In the two-eye type stereoscopic image pickup apparatus in the related art, an adjustment of the distance between cameras is performed by actually changing an arrangement of the left and right cameras, and an adjustment of the convergence of the camera is also performed by adjusting an arrangement of the camera itself or by a lens control of each camera.

In regard to the distance between cameras, there is a limitation to make narrow the distance by adjusting (reducing) the size of a lens or an image pickup device that is mounted in the cameras. Therefore, reflected light and transmitted light are photographed with left and right cameras, respectively, through a half mirror mounted on a stand called a rig, and therefore the distance between cameras may be narrowed without causing a physical interference between the cameras.

In addition, in regard to the convergence of the cameras, a paralleling method in which optical axes of the left and right cameras are disposed in parallel with each other, and an intersecting method in which the optical axes of left and right cameras are made to intersect each other in conformity to a depth (convergence point) of an object to be photographed, which becomes on-screen at the time of display may be exemplified. The convergence of the camera is a necessary adjustment item when adjusting an amount of protrusion or an amount of retraction of the stereoscopic image from a display screen. Currently, the convergence is adjusted by directly changing the directions of the left and right cameras in a physical manner, or adopting a type in which an optical path is adjusted in left and right lenses, respectively, or a type in which pixel positions of left and right images are made to be deviated from each other in an image processing manner.

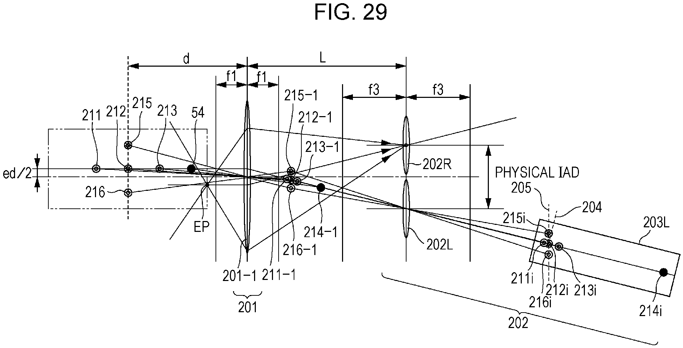

Here, in regard to the two-eye type stereoscopic image pickup apparatus, a configuration in which one objective optical system is disposed in front of the left and right cameras that are image pickup optical systems is shown in Fig. 29.

In Fig. 29, an objective optical system 201, which allows an image to be formed on an image plane within an image pickup optical system, is expressed as one convex lens. In addition, image pickup optical systems 202R and 202L are expressed as a left convex lens and a right convex lens, respectively, and it is indicated that the objective optical system 201 is not an afocal optical system.

Fig. 29 is a diagram in which a stereoscopic image pickup apparatus is seen from an upper side, and illustrates a position of a subject image that is imaged to the left camera (an image pickup device 203L that photographs a right eye image) in a case where subjects 211 to 216, which are slightly deviated to the right side from the central axis of the objective optical system 201, are photographed. The subjects 211 to 216 are six subjects including four subjects that are located in a back and front direction, and two subjects that are located one by one at the left side and the right side, respectively, with respect to the subject 212 located near the center.

When description is made with respect to the subject 214 as an example, an intersecting point of a line, which connects the subject 214 and the center of the objective optical system 201, and a light beam, which is incident from the subject 214 in parallel with the central axis of the objective optical system 201 and is refracted, is an image position 214-1 by the objective optical system 201. An image at this image position 214-1 is imaged at an image position 214i by an image pickup optical system 202L. In this manner, images of the subjects 211 to 216 are imaged at image positions 211i to 216i through image positions 211-1 to 216-1, respectively.

Since the positions of the subject images that are imaged are arranged in a line to be orthogonal to an image plane 204, it is considered that light beams that are transmitted through the subjects 211 to 216 are transmitted through a pupil (a pupil of a right eye because the subject is located at the right side in relation to the central axis of the objective optical system 201). Although not shown in Fig. 29, in regard to an image of a left eye image, an arrangement of a subject that is transmitted through a pupil in this manner may be considered. At this time, a distance ed of an effective IAD is obtained as f1/(L-f1) times the physical IAD from a homothetic ratio of a homologous triangle that has a back-side focal position of the objective optical system 201 as an apex angle. Here, L represents a distance between the objective optical system 201 and principal planes of the image pickup optical systems 202R and 202L, f1 represents a focal length of the objective optical system 201. In addition, in Fig. 29, f3 represents a focal length of the image pickup optical systems 202R and 202L, and d represents a distance from the principal plane of the objective optical system 201 to the subject 212.

In the stereoscopic image pickup apparatus in Fig. 29, there is an advantage in that the distance ed of the effective IAD may be smaller than the physical IAD, but an inclination of the image plane 204 is different from an inclination of the focus plane 205, such that there is a problem in that focusing over an entire screen is not simple.

Japanese Unexamined Patent Application Publication No. 2003-5313 discloses a stereoscopic image pickup apparatus including an objective optical system having a focusing function, and imaging optical systems that image a plurality of light beams of a subject, which are emitted from different paths of the objective optical system, as parallax images. In the imaging optical systems, optical axes of respective optical system are positioned in the same plane and intersect each other at a focal position of each optical system in the plane, and an optical axis of the objective optical system is positioned in the plane.

However, in the rig of the half mirror type, it is difficult to manipulate a large-scale apparatus, and it tends to be expensive to improve characteristics of the half mirror that gives an effect on a photographing result.

In addition, the convergence point, at which the optical axes of the left and right cameras intersect each other, is set to be equally distant from the left and right cameras. Thus, it is necessary to avoid a deviation in the direction of the left and right cameras by adjusting independently the left and right cameras, and it is preferable to perform the adjustment thereof by one mechanism. Therefore, in regard to the distance between cameras or the convergence that is necessary to be adjusted for each photographing scene, it is preferable to allow the distance and the convergence to be changed through adjustment as simply as possible.

In addition, in the two-eye type stereoscopic image photographing, it is necessary that a difference other than the left and right parallax that can be obtained from a difference in the depth does not occur between left and right images, and a relative relationship of the left and right cameras are accurately set. To perform this setting, time is necessary for an adjustment operation before photographing in the rig using the half mirror, such that it is preferable to shorten this time. In addition, in the present stereo camcorder, the distance between cameras is fixed, this resulting in one restriction of a photographing range.

It is desirable to easily adjust a distance between effective cameras and an effective convergence without changing a physical relative position of a plurality of cameras in a stereoscopic image pickup apparatus including the plurality of cameras as image pickup optical systems.

Various respective aspects and features of the invention are defined in the appended claims. Combinations of features from the dependent claims may be combined with features of the independent claims as appropriate and not merely as explicitly set out in the claims.

Embodiments of the invention relate to an apparatus and method in which a stereoscopic image is photographed, and more particularly, to a technology to adjust a distance between effective cameras and an effective convergence.

According to an embodiment of the present disclosure, there is provided a stereoscopic image pickup apparatus including an objective optical system of an afocal optical system, which includes two or more lens groups that form a subject as a real image or a virtual image and that are disposed on the same optical axis; a plurality of image pickup optical systems that allow a plurality of subject light beams, which are emitted from different paths of the objective optical system, to be imaged as independent images, respectively, by a plurality of independent lens groups; and a plurality of image pickup devices that are provided in correspondence with the plurality of image pickup optical systems, and that convert the images, which are imaged by the plurality of image pickup optical systems, to image signals.

In addition, in a case where the objective optical system is equivalently configured by two lens groups including a subject-side lens group and an image pickup optical system-side lens group, the image pickup optical system-side lens group and the image pickup optical system may be made to have the same focal plane as each other, and then a distance on an optical axis between the two lens groups in the objective optical system may be changed.

According to the stereoscopic image pickup device of this embodiment of the present disclosure, the objective optical system of the afocal optical system is combined with respect to the image pickup optical system including a plurality of optical systems, such that it is possible to adjust a convergence to give an effective distance (effective IAD) between pupils and an effective parallax of zero without changing a physical position between the image pickup optical systems.

In a case where the objective optical system is an afocal optical system, an arrangement of the objective optical system and the image pickup optical system (not-inclined) has no relation with the adjustment of the effective IAD.

On the other hand, when it is assumed that the objective optical system is configured by two lens group, in a case where an image pickup optical system-side lens group and a lens group of the image pickup optical system are made to have the same focal plane as each other, when a distance between the two lens groups of the objective optical system is changed, the objective optical system does not become an afocal optical system, but it is possible to change the convergence while the effective IAD is not changed.

According to the embodiment of the present disclosure, it is possible to easily adjust a distance between effective cameras and an effective convergence without changing a physical relative position of a plurality of cameras that is provided with a plurality of image pickup optical systems and image pickup devices.

Embodiments of the invention will now be described with reference to the accompanying drawings, throughout which like parts are referred to by like references, and in which:

Figs. 1A and 1B are explanatory diagrams illustrating a basic configuration example of a current stereoscopic image pickup apparatus, in which Fig. 1A illustrates a situation in which a plurality of subjects are photographed with left and right cameras, from an upper side, and Fig. 1B illustrates a left image and a right image in which image positions of the subjects are inverted;

Fig. 2 is an explanatory diagram illustrating a situation in which the left and right images picked up by the stereoscopic image pickup apparatus shown in Figs. 1A and 1B are displayed and a person watches the images;

Figs. 3A and 3B are explanatory diagrams illustrating a situation in which the subjects are photographed with the left and right cameras of the stereoscopic image pickup apparatus spaced from each other, in which Fig. 3A illustrates a situation in which a plurality of subjects are photographed with left and right cameras, from an upper side, and Fig. 3B illustrates a left image and a right image in which image positions of the subjects are inverted;

Fig. 4 is an explanatory diagram illustrating a situation in which a person watches the stereoscopic image by using the left and right images picked up by the stereoscopic image pickup apparatus shown in Figs. 3A and 3B;

Fig. 5 is an explanatory diagram illustrating a relationship between the plurality of subjects, which are disposed in parallel with each other in a camera direction, and a pupil;

Fig. 6 is an explanatory diagram illustrating a relationship between two subject rows that are disposed in parallel with each other in the direction of left and right cameras, and an IAD;

Fig. 7 is an explanatory diagram illustrating a relationship between the subject rows, which are disposed in parallel with each other in camera directions, and the IAD and the pupil at the time of IAD conversion;

Fig. 8 is an explanatory diagram illustrating a relationship between the IAD and the pupil before and after the IAD conversion, in a case where a direction of the stereoscopic image pickup apparatus and a normal direction of an image plane are different from each other;

Fig. 9 is an explanatory diagram illustrating a relationship between subject rows that are parallel with each other in the camera directions, and the IAD, in the case of setting a convergence position;

Fig. 10 is an explanatory diagram illustrating a relationship between the subject rows that are parallel with each other in the camera directions, and the IAD and the pupil before and after the IAD conversion, in the case of setting a convergence position;

Fig. 11 is a configuration diagram illustrating an overview of the stereoscopic image pickup apparatus (first and second lens groups of the objective optical system are convex lenses and are in a confocal relationship) according to a first embodiment of the present disclosure;

Fig. 12 is a configuration diagram illustrating an overview of the stereoscopic image pickup apparatus (the first and second lens groups of the objective optical system are convex lenses and are in the confocal relationship, and second lens group of the objective optical system and an image pickup optical system are in a confocal relationship) according to a second embodiment of the present disclosure;

Fig. 13 is a configuration diagram illustrating an overview of the stereoscopic image pickup apparatus (the second lens groups of the objective optical system and the image pickup optical system are in a confocal relationship) according to a third embodiment of the present disclosure;

Fig. 14 is an explanatory diagram illustrating a relationship between a distance (physical IAD) between physical cameras and a distance (effective IAD) between effective cameras in the stereoscopic image pickup apparatus according to the first embodiment of the present disclosure, in a case where the objective optical system is configured by a concave lens and a convex lens;

Fig. 15 is an explanatory diagram illustrating a relationship between a physical convergence point and an effective convergence point in the stereoscopic image pickup apparatus according to the first embodiment of the present disclosure, in a case where the objective optical system is configured by the concave lens and the convex lens;

Fig. 16 is an explanatory diagram illustrating a relationship between a subject and an image in a stereoscopic image pickup apparatus as a reference;

Figs. 17A and 17B are explanatory diagrams illustrating a relationship between respective distances of Fig. 16, in which Fig. 17A illustrates a relationship between respective distances with respect to the right eye, and Fig. 17B illustrates a relationship between respective distances with respect to the left eye;

Fig. 18 is an explanatory diagram illustrating a relationship between a subject and an image in the stereoscopic image pickup apparatus according to an embodiment of the present disclosure, in a case where a concave lens is disposed as the first lens group of the objective optical system, and a convex lens is disposed as the second lens group;

Fig. 19 is an explanatory diagram illustrating a relationship between a subject and an image in the stereoscopic image pickup apparatus according to an embodiment of the present disclosure, in a case where a convex lens is disposed as the first lens group of the objective optical system, and a convex lens is provided as the second lens group;

Fig. 20 is an explanatory diagram illustrating a relationship between a subject and an image in the stereoscopic image pickup apparatus according to an embodiment of the present disclosure, in a case where a convex lens is disposed as the first lens group of the objective optical system, and a concave lens is disposed as the second lens group;

Fig. 21 is a block diagram illustrating a configuration example (corresponding to Condition 1) of the stereoscopic image pickup apparatus according to an embodiment of the present disclosure;

Fig. 22 is a block diagram illustrating another configuration example (corresponding to Condition 2) of the stereoscopic image pickup apparatus according to an embodiment of the present disclosure;

Fig. 23 is a block diagram illustrating a configuration example in the stereoscopic image pickup apparatus according to an embodiment of the present disclosure, in a case where the objective optical system is utilized as a detachable conversion lens;

Fig. 24 is a block diagram illustrating a configuration example in the stereoscopic image pickup apparatus according to an embodiment of the present disclosure, in a case where the objective optical system is utilized as a conversion lens in which a focal length is fixed;

Fig. 25 is an explanatory diagram illustrating an example in the stereoscopic image pickup apparatus according to an embodiment of the present disclosure, in a case where the objective optical system is configured by three lens groups;

Fig. 26 is an explanatory diagram illustrating a case in which the first lens group in Fig. 25 is made to move;

Fig. 27 is an explanatory diagram illustrating an incidence direction of a light beam that passes through a pupil of a physical camera, which is orthogonal to an image plane, in the objective optical system in Fig. 26;

Fig. 28 is an explanatory diagram illustrating an IAD control in the stereoscopic image pickup apparatus according to an embodiment of the present disclosure; and

Fig. 29 is an explanatory diagram illustrating a stereoscopic image pickup apparatus in the related art.

Hereinafter, an embodiment (hereinafter, referred to as "present example") for carrying out the present disclosure will be described with reference to attached drawings. Description will be made in the following order. In addition, in respective drawings, like reference numbers will be given to common parts having substantially similar functions, and redundant description thereof will be omitted.

1. Description with Respect to Binocular Stereoscopic Vision
2. Principle of Stereoscopic Image Pickup Apparatus According to Embodiment of Present Disclosure
3. Overview of Configuration of Stereoscopic Image Pickup Apparatus According to Embodiment of Present Disclosure

    3-1. First Embodiment (First and second Lens Groups of Objective Optical System are in Confocal Relationship)
    3-2. Second Embodiment (First and second Lens Groups of Objective Optical System are in Confocal Relationship, and Second Lens Group of Objective Optical System and Image Pickup Optical System are in Confocal Relationship)
    3-3. Third Embodiment (Second Lens Group of Objective Optical System and Image Pickup Optical System are in Confocal Relationship)

4. Details of Configuration of Stereoscopic Image Pickup Apparatus According to Embodiment of Present Disclosure

    4-1. Description of Condition 1
    4-2. Description of Condition 2
    4-3. Relationship between Subject and Image in Two-Eye Stereoscopic Image Pickup Apparatus
    4-4. Relationship Between Subject and Image in a Case Where Concave Lens is Disposed as First Lens Group of Objective Optical System According to Embodiment of Present Disclosure, and Convex Lens is Disposed as Second Lens Group
    4-5. Relationship Between Subject and Image in a Case Where Convex Lens is Disposed as First Lens Group of Objective Optical System According to Embodiment of Present Disclosure, and Convex Lens is Disposed as Second Lens Group
    4-6. Relationship Between Subject and Image in a Case Where Convex Lens is Disposed as First Lens Group of Objective Optical System According to Embodiment of Present Disclosure, and Concave Lens is Disposed as Second Lens Group
    4-7. Calculation Formula at the Time of Being Applied to Intersecting Method

5. Block Configuration of Stereoscopic Image Pickup Apparatus According to Embodiment of Present Disclosure

    5-1. Configuration Example Corresponding to Condition 1
    5-2. Configuration Example Corresponding to Condition 2

5-3. Configuration Example in Which Objective Optical System is Configured by Detachable Convergence Lens

5-4. Configuration Example in Which Objective Optical System is Configured by Conversion Lens Having Fixed Focal Length

6. Configuration Example of Objective Optical System Configured by Three Lens Groups

1. Description with Respect to Binocular Stereoscopic Vision

First, description with respect to stereoscopic vision, parallax, and an IAD, and description with respect to a pupil and an effective pupil will be made. The pupil and effective pupil are introduced to consider binocular parallax.

In a current stereoscopic vision, a stereoscopic effect is obtained by binocular parallax (hereinafter, referred to as "parallax"). Therefore, control of the parallax is very important in stereoscopic image photographing. The parallax is a deviation on two images in a horizontal direction, which occurs when photographed from left and right visual points (photographing positions) different from each other, and such things as how far the positions of the left and right visual points are distant are very important to control the parallax.

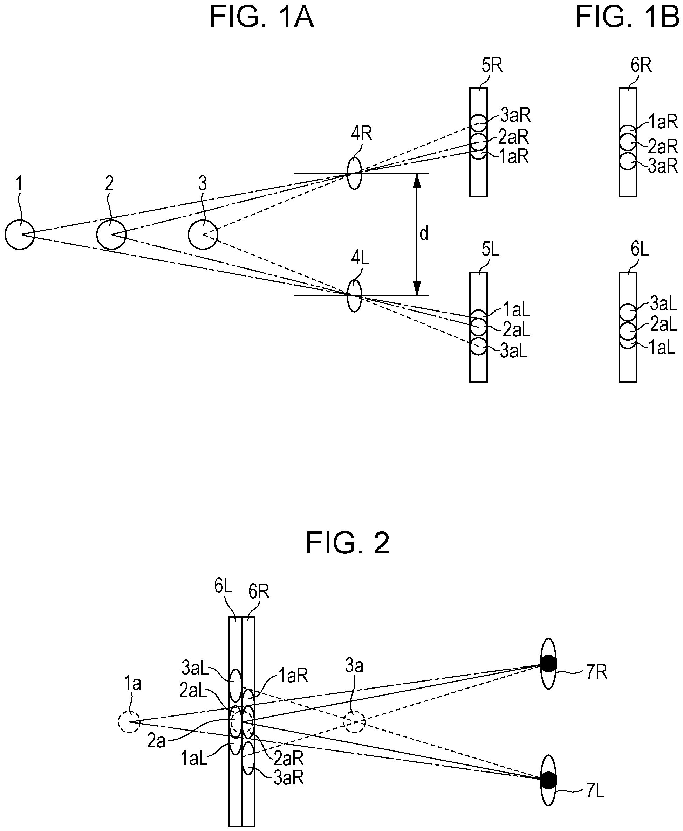

Figs. 1A and 1B show explanatory diagrams illustrating a basic configuration example of a current stereoscopic image pickup apparatus. Fig. 1A illustrates a situation in which a plurality of subjects are photographed with left and right cameras, from an upper side, and Fig. 1B illustrates images in which image positions of the subjects are inverted.

In an example of Fig. 1A, three subjects 1 to 3 arranged in a straight line that is parallel with a camera direction are photographed by the right camera including an image pickup lens (a pupil 4R) and an image pickup device 5R, and the left camera including an image pickup lens (a pupil 4L) and an image pickup device 5L. In regard to the left and right cameras, each center of the image pickup lenses is schematically represented by a pupil, and principal light beams from three subjects 1 to 3 are transmitted through the left and right pupils 4R and 4L, and are imaged on image planes that are parallel with image pickup planes of the image pickup devices 5R and 5L. A distance between the left and right pupils 4R and 4L is an IAD, and the distance d is an important factor in the photographing of the stereoscopic image.

On the image planes, the images of the subjects are projected in a horizontally inverted state, such that in the left and right image pickup devices, the positions of the images are inverted, and thereby the right image and the left image are output. In an example of Fig. 1B, images 1aR to 3aR of the subjects 1 to 3 are imaged on the right image pickup device 5R, and the right image pickup device 5R outputs an right image 6R in which the images 1aR to 3aR are inverted. In addition, images 1aL to 3aL of the subjects 1 to 3 are formed on the left image pickup device 5L, and the left image pickup device 5L outputs a left image 6L in which the images 1aL to 3aL are inverted.

Fig. 2 shows an explanatory diagram illustrating a situation in which the left and right images picked up by the stereoscopic image pickup apparatus shown in Figs. 1A and 1B are displayed and a person watches the images.

On a display screen, the right image 6R and the left image 6L are presented, but the right image is presented only to the right eye and the left image is presented only to the left eye by an arbitrary method such as a method in which a liquid shutter is used. Fig. 2 illustrates a situation in which the right image 6R and the left image 6L are shown side by side at display positions, and the stereoscopic image is reproduced with a boundary line of the left and right images set as a display plane (screen) for convenience of description.

In regard to the intermediate subject 2 among the three subjects, the left and right images 2aR and 2aL are shown at the same position (intersecting point 2a), such that parallax becomes zero. Therefore, in the stereoscopic vision, it looks as if the subject 2 is present exactly on the display screen.

In addition, in regard to the subject 3 closest to a camera, a position viewed by a right eye 7R and a position viewed by a left eye 7L are different from each other, such that a human brain determines whether the subject 3 (images 3aR and 3aL) is to be considered as one object when the subject 3 is present at which position in the depth direction, and determines that the subject 3 is present at an intersecting point 3a of left and right sight lines.

Furthermore, similarly, in regard to the subject 1 farthest from the camera, the human brain determines that subject 1 is present at an intersecting point 1a at which sight lines intersect each other at a back side in relation to the display screen. In this manner, a deviation in positions of images that are projected as left and right images of the same subject is referred to as parallax (binocular parallax), and the brain performs a stereoscopic understanding due to the presence of the parallax, and thereby the stereoscopic vision is realized.

In addition, a depth position (in Figs. 1A and 1B) at which parallax is zero such as the intersecting point 2a corresponding to the subject 2 is called a convergence point, but this position is recognized as if it present on a display screen, such that this position is regarded as a position that is most easily viewed to human. Parallax may be set to zero in conformity to the subject 3 that is closest to the camera, or parallax may be set to zero in conformity to the subject 1 that is farthest from the camera by changing a way of overlapping left and right screens. However, for example, in a case where parallax is set to zero in conformity to the subject 3, parallax with respect to the subject 1 becomes broad to that extent. Therefore, an optimal position of the convergence point may be different depending on a photographing scene or a photographing intention.

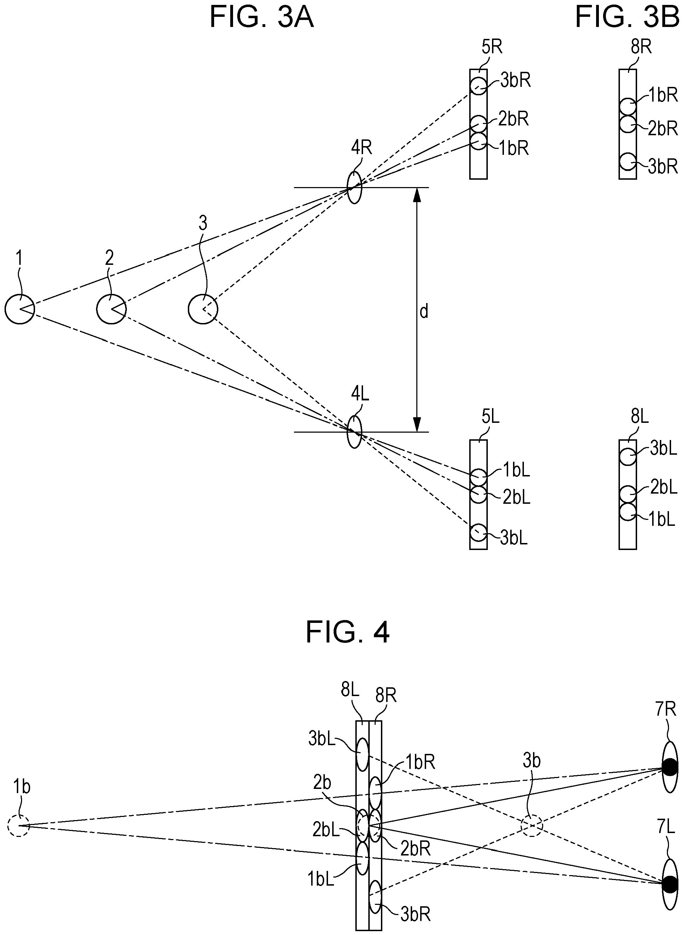

Figs. 3A and 3B are explanatory diagrams illustrating a situation in which the subjects are photographed with the left and right cameras of the stereoscopic image pickup apparatus spaced from each other, in which Fig. 3A illustrates a situation in which a plurality of subjects are photographed with left and right cameras, from an upper side, and Fig. 3B illustrates a left image and a right image in which image positions of the subjects are inverted.

In an example in Fig. 3B, images 1bR to 3bR of the subjects 1 to 3 are formed on the right image pickup device 5R, and the right image pickup device 5R outputs an right image 8R in which the images 1bR to 3bR are inverted. In addition, images 1bL to 3bL of the subjects 1 to 3 are formed on the left image pickup device 5L, and the left image pickup device 5L outputs a left image 8L in which the images 1bL to 3bL are inverted. In this case, a starting position of each of left and right images is set in such a manner that the intermediate subject 2 among three subjects overlaps the convergence point. Similarly to Figs. 1A and 1B, photographed images become the left and right images with the images 2bR and 2bL of the subject 2 located at the center of the images.

Fig. 4 shows an explanatory diagram illustrating a situation in which the left and right images picked up by the stereoscopic image pickup apparatus shown in Figs. 3A and 3B are displayed and a person watches the images.

Similarly to Fig. 2, it looks as if an image of the subject 2 is present at a position (intersecting point 2b) on a display screen, and an image of the subject 3 is present at a position (intersecting point 3b) that is a front side in relation to the display screen, and an image of the subject 1 is present at a position (intersecting point 1b) that is a back side in relation to the display screen, but a sense of protrusion of the image of the subject 3 and a sense of retraction of the image of the subject 1 becomes strong. That is, a range of parallax becomes wide due to a distance between cameras (a distance between pupils 4R and 4L). This is also clear from a situation in which an overlapped state of the images of the three subjects 1 to 3, which are to be projected as the right image 8R and the left image 8L, is different from a case of Fig. 2. As described above, it can be seen that the control of the distance (IAD: distance between pupils) between cameras is very important at the time of controlling a stereoscopic effect.

2. Principle of Stereoscopic Image Pickup Apparatus According to Embodiment of Present Disclosure

Next, how to understand a position of a pupil when considering the IAD will be described.

In a normal camera, the position of the pupil is present on a line orthogonal to an image plane that passes through the center of an image pickup lens. This situation is easy to consider in a case where one central axis of an image pickup lens is present, but this situation is not true of a case where a plurality of central axes of the image pickup lens are present, as it is. Here, it is assumed that left and right pupils are located at positions symmetrical with respect to a central line along directions of the cameras, and in regard to image planes, normal lines of the image planes are parallel with the directions of the cameras at positions that are symmetrical with respect to the central axis.

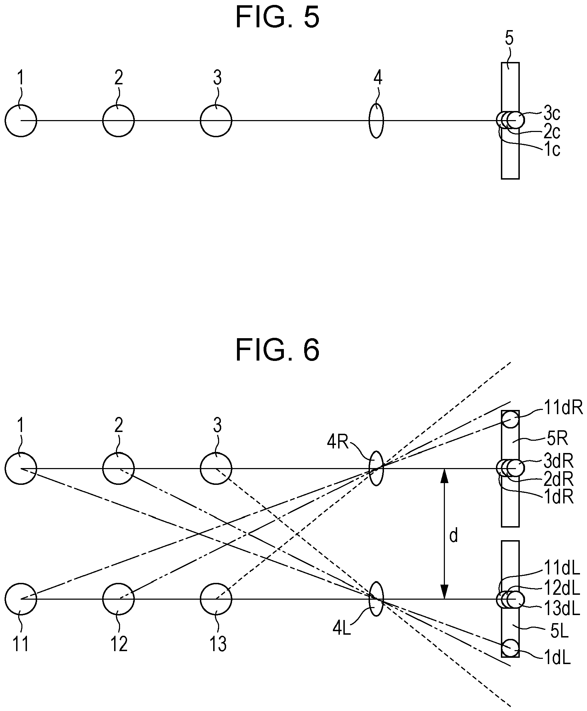

Fig. 5 illustrates a relationship between the plurality of subjects, which are disposed in parallel with each other in a camera direction, and a pupil.

First, with respect to one camera provided with the image pickup lens and the image pickup device 5, a relationship between a subject, a pupil, and an image projected onto an image plane will be considered. In a normal camera, a position of a pupil 4 is present at the center of the image pickup lens, such that a light beam orthogonal to the image plane is incident light that is also in a direction orthogonal to the image plane and that is in a direction of the camera before the light beam passes through the pupil 4. From this, as shown in Fig. 5, in a case where images 1c to 3c of three subjects 1 to 3 that are arranged in a line to be parallel with the direction of the camera overlap each other on the image plane (positions of the images are present on a line orthogonal to the image plane), it can be seen that the pupil is present on a straight line thereof. In addition, since the direction of the camera and the light beam orthogonal to the image plane are not necessarily parallel with each other, description has been made by using the expression "three subjects that are arranged in a line to be parallel with the direction of the camera".

When considering the above-described situation with left and right cameras, as shown in Fig. 6, when images 1dR to 3dR and images 11dL to 13dL of subjects 1 to 3 and subjects 11 to 13, which make up two subject rows parallel with directions of left and right cameras, overlap each other on the image planes, respectively, a distance d (physical IAD) between left and right pupils 4R and 4L at this time is considered as a distance between the subject rows. In an embodiment of the present disclosure, a relationship in the subject rows, the images, and the pupils are important. In addition, the image 13dR is an image of the subject 11, which is formed on the image pickup device 5R after passing through the center of the pupil 4R, and the image 1dL is an image of the subject 1, which is imaged on the image pickup device 5L after passing through the center of the pupil 4L.

Here, a case in which an effective IAD is obtained by converting the physical IAD that is originally present is considered.

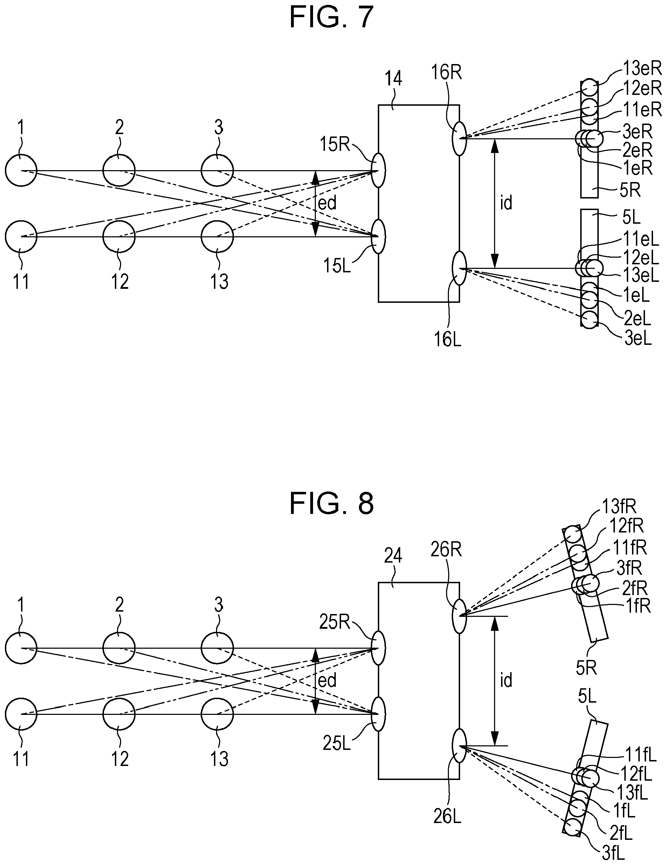

In this case, in regard to the pupil with respect to the physical IAD, an effective pupil with respect to the effective IAD is considered. Basically, as shown in Fig. 6, when it is assumed that light beams that pass through the pupils 4R and 4L are not changed, as shown in Fig. 7, in a case where images 1eR to e3R and images 11eL to 13eL of subjects 1 to 3 and subjects 11 to 13, which make up two subject rows that are parallel with each other in a camera direction, overlap each other on image planes, respectively, a distance ed between the two subject rows may be considered as the effective IAD.

Images 11eR, 12eR, and 13eR that are formed on the image pickup device 5R are images of the subjects 11 to 13, which are imaged after passing through an incidence-side effective pupil 15R and an emission-side internal pupil 16R of an IAD converting portion 14. In addition, images 1eL, 2eL, and 3eL that are formed on the image pickup device 5L are images of the subjects 1 to 3, which are imaged after passing through centers of an incidence-side effective pupil 15L and an emission-side internal pupil 16L of the IAD converting portion 14.

The IAD converting portion 14 has a function of converting a distance d of a physical IAD and a distance ed of an effective IAD. The two effective pupils 15R and 15L, which are located at the incidence side of the IAD converting portion 14, may be considered as positions at which the light beams that are incident with respect to the IAD converting portion 14 are collected actually or virtually, by reversely calculating light beams that are collected at positions of internal pupils 16R and 16L located in the vicinity of intersecting points with centers of principal planes of image pickup lenses, when incident light, which passes through the two subject rows, vertically enters respective image planes. The effective pupils are present on the incident light beams that pass through the above-described two subject rows or on extended lines thereof.

In this specification, a distance id between the two internal pupils 16R and 16L that are located at the emission side of the IAD converting portion 14 is called "internal IAD". The "internal pupils" and the "internal IAD" are names that are given for convenience of description, because these do not necessarily have the same values as those of the physical pupil and the physical IAD before the IAD converting portion 14 is provided. For example, in a case where a convergence position is set based on "Condition 2" described later, the internal pupils and the internal IAD are different from pupils and IAD before conversion.

Fig. 8 illustrates a relationship between the IAD and the pupil before and after the IAD conversion, in a case where a direction of the stereoscopic image pickup apparatus and a normal direction of an image plane are different from each other.

Light beams that pass through two subject rows are incident to effective pupils 25R and 25L that are located at an input side of an IAD converting portion 24, and are emitted from internal pupils 26R and 26L that are located at an output side of the IAD converting portion 24, and then are received by respective image pickup devices 5R and 5L. In Fig. 8, similarly to Fig. 7, images 1fR, 2fR, and 3fR, and images 11fL, 12fL, and 13fL of subjects 1 to 3 and subjects 11 to 13, which make up subject rows arranged in a line to be parallel with a direction of the stereoscopic image pickup apparatus, overlap each other on image planes, respectively.

The images 11fR, 12fR, and 13fR formed on the image pickup device 5R are images of the subjects 11 to 13, which are imaged after passing through the incidence-side effective pupil 25R and the emission-side internal pupil 26R of the IAD converting portion 24. In addition, the images 1fL, 2fL, and 3fL formed on the image pickup device 5L are images of the subjects 1 to 3, which are imaged after passing through the incidence-side effective pupil 25L and the emission-side internal pupil 26L of the IAD converting portion 24.

Next, description will be made with respect to an effective IAD and an effective pupil in a case (intersecting method) where the convergence position is not an infinite distance.

Since the paralleling method is applied in the above-described example of Figs. 6 and 7, incidence light, which is parallel with the direction of the stereoscopic image pickup apparatus other than the subject rows, is vertically projected to the center of the image plane after passing through the pupil. Therefore, the pupil is present on the central axis of the image pickup lens similarly to the case that is considered with a single camera.

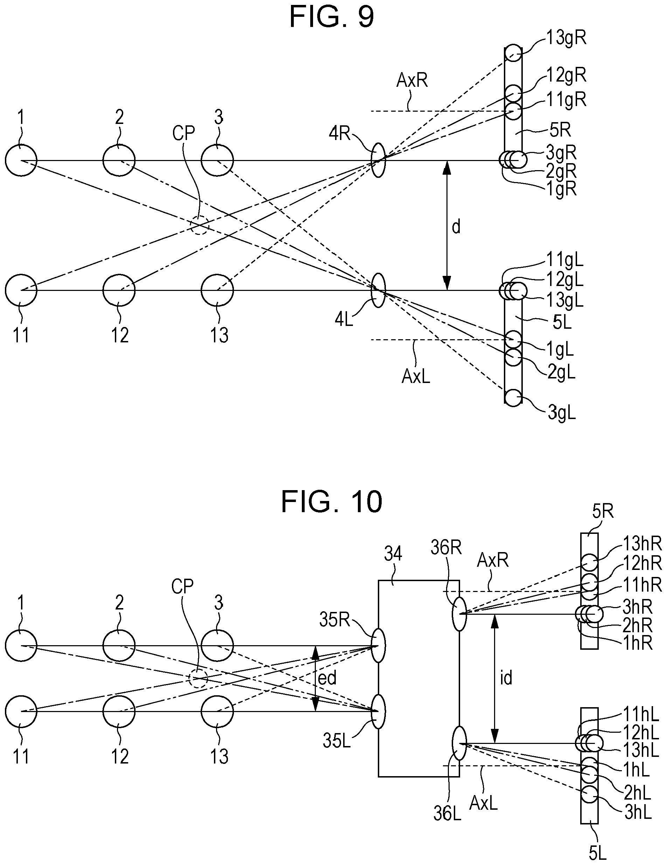

However, in a case where a position (a broken-circle portion) of a convergence point CP is set as shown in Fig. 9, lines AxR and AxL, which pass through the center of the image planes and are orthogonal to the image planes, do not pass through pupils that is assumed when considering the IAD. This position is a position of a pupil, which is not commonly considered in a single camera.

That is, images 1gR, 2gR, and 3gR, and images 11gL, 12gL, and 13gL of the subjects 1 to 3 and the subjects 11 to 13, which make up two subject rows that are parallel with directions of left and right cameras, overlap each other on the image planes, respectively, but are not projected to the centers of the image planes after passing through respective pupils 4R and 4L. Images 11gR, 12gR, and 13gR that are formed on the image pickup device 5R are images of the subjects 11 to 13, which are imaged after passing through the pupil 4R. In addition, images 1gL, 2gL, and 3gL that are formed on the image pickup device 5L are images of the subjects 1 to 3, which are imaged after passing through the pupil 4L.

This is true of a case where the lines AxR and AxL enter an IAD converting portion that converts the IAD. In the case of performing a stereoscopic photographing by using the intersecting method, as shown in Fig. 10, the lines AxR and AxL, which pass through the centers of the image planes and are orthogonal to the image planes, do not pass through the internal pupils. Fig. 10 illustrates a relationship between subject rows that are parallel with each other in the camera directions, and the IAD and the pupil before and after the IAD conversion, in the case of setting a convergence position. In the example of Fig. 10, the convergence point CP is set in conformity to the subject 1 as an example.

That is, light beams that pass through two subject rows are incident to effective pupils 35R and 35L that are located at an input side of an IAD converting portion 34, and are emitted from internal pupils 36R and 36L that are located at an output side of the IAD converting portion 34, and then are received by respective image pickup devices 5R and 5L. At this time, images 1hR, 2hR, and 3hR, and images 11hL, 12hL, and 13hL of subjects 1 to 3 and subjects 11 to 13, which make up subject rows arranged in a line to be parallel with a direction of the stereoscopic image pickup apparatus, overlap each other on image planes, respectively, but are not projected to the centers of the image planes after passing through the respective internal pupils 36R and 36L.

The images 11hR, 12hR, and 13hR formed on the image pickup device 5R are images of the subjects 11 to 13, which are imaged after passing through the incidence-side effective pupil 35R and the emission-side internal pupil 36R of the IAD converting portion 34. In addition, the images 1hL, 2hL, and 3hL formed on the image pickup device 5L are images of the subjects 1 to 3, which are imaged after passing through the incidence-side effective pupil 35L and the emission-side internal pupil 36L of the IAD converting portion 34.

The stereoscopic image pickup apparatus according to the embodiment of the present disclosure has the same function as the above-described IAD converting portion, and performs the control of the IAD by using the effective pupils and the effective IAD that are adjusted by the IAD converting portion.

3. Overview of Configuration of Stereoscopic Image Pickup Apparatus According to Embodiment of Present Disclosure

Hereinafter, an overview of a configuration of the stereoscopic image pickup apparatus according to an embodiment of the present disclosure will be described.

3-1. First Embodiment (First and second Lens Groups of Objective Optical System are in Confocal Relationship)

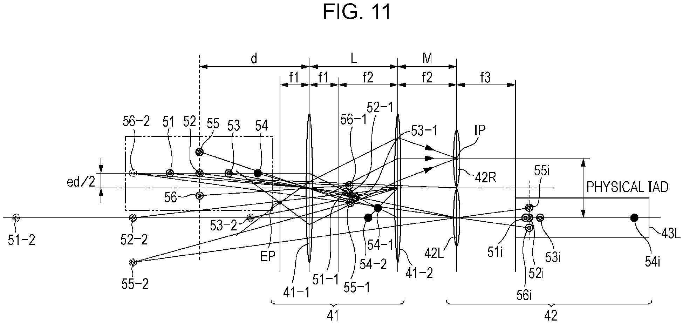

Fig. 11 is a configuration diagram illustrating an overview of the stereoscopic image pickup apparatus according to an example of a first embodiment of the present disclosure.

In regard to the first embodiment, in a two-eye type stereoscopic image pickup apparatus, two lens groups are disposed as an objective optical system 41 in front of left and right cameras (image pickup portions) as an image pickup optical system 42. In addition, a first lens group 41-1 and a second lens group 41-2 of the objective optical system 41 are disposed in a confocal relationship, and the objective optical system 41 is set as an afocal optical system that emits parallel light with respect to incidence of parallel light. The objective optical system 41 and the image pickup optical system 42 correspond to the above-described IAD converting portion.

It is necessary to use at least two lens groups to realize the afocal optical system, and in this example, focal positions are made to coincide with each other by using two sets of the first lens group 41-1 and the second lens group 41-2 that may be equivalently considered as a convex lens to realize the afocal optical system (Condition 1).

Fig. 11 is a diagram in which the stereoscopic image pickup apparatus is seen from an upper side, and illustrates positions of subject images that are imaged to the left camera (an image pickup device 43L that photographs a right-eye image), in a case where subjects 51 to 56, which are slightly deviated to the right side from the central axis of the objective optical system 41, are photographed. The subjects 51 to 56 are six subjects including four subjects that are located in a back and front direction, and two subjects that are located one by one at the left side and the right side, respectively, with respect to the subject 52 located near the center. In addition, the image pickup device 43L of this example is shown as if the image pickup device 43L is long in an optical axis direction, but the image pickup device 43L is disposed to be orthogonal to the optical axis, such that basically, the image pickup device 43L is not long. For example, the image pickup device 43L is expressed as a straight line (a plane in stereoscopic manner, because a thickness is present in the vertical direction in the drawing) passing through image positions 55i and 56i. In an example of Fig. 11, a position of the image pickup device 43L is indicated by a straight line (a broken line) passing through the image positions 55i and 56i, and a case in which focusing to the image positions, 52i, 55i and 56i is performed is illustrated.

When description is made with respect to the subject 54 as an example, an intersecting point of a line, which connects the subject 54 and the center of the first lens group 41-1 of the objective optical system 41, and a light beam, which is incident from the subject 54 in parallel with the central axis of the first lens group 41-1 and is refracted, is an image position 54-1 by the first lens group 41-1. An intersecting point of a line, which connects the image position 54-1 and the center of the second lens group 41-2, and an extended line of a light beam, which is incident from the image position 54-1 in parallel with the central axis of the second lens group 41-2 and is refracted, is an image position 54-2 by the second lens group 41-2. An image at this image position 54-2 is formed on an image position 54i by an image pickup lens group 42L of the image pickup optical system 42. In this manner, images of the subjects 51 to 56 are image at image positions 51i to 56i through image positions 51-1 to 56-1 and image positions 51-2 to 56-2, respectively.

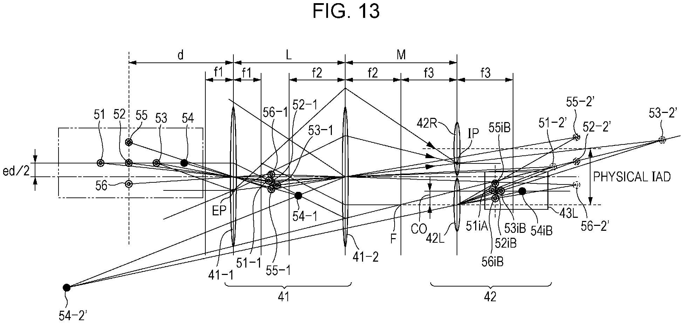

In a case where the first lens group 41-1 and the second lens group 41-2 are in a confocal relationship, a subject image that is observed through the second lens group 41-2 becomes f2/f1 times in the horizontal direction, and becomes two times (f2/f1) in the depth direction in a field. When images that are imaged at the image positions 51i to 56i are photographed by the image pickup optical system, it is possible to photograph the actual six subjects in an enlarged or reduced manner. When the subjects are photographed in the enlarged or reduced manner, it is possible to relatively reduce or enlarge a distance between cameras of the image pickup optical system. This is an operation principle that is mostly simplified, but even in a case where the first group and the second group are not in a confocal relationship, this structure is effective, which will be described later with reference Fig. 13.

In this example, a light beam that is incident in parallel with the central axis of the objective optical system 41 is refracted by the first lens group 41-1 toward a focal position, and is recovered in parallel by the second lens group 41-2, and then is emitted. Therefore, when considering a light beam that exactly passes through the center (internal pupil IP) of the image pickup lens group of the image pickup optical system 42 after being emitted, a position of an effective pupil EP is present on the light beam (in Fig. 11, a left-side effective pupil is shown in consideration of a visibility of drawing).

At this time, an effective IAD is obtained as f1/f2 of a physical IAD from a homothetic ratio of a homologous triangle that has a confocal position located between two lens groups of the objective optical system 41 as an apex angle. Here, f1 represent a focal length of the first lens group 41-1 (convex lens) of the objective optical system 41, and f2 represents a focal length of the second lens group 41-2 (convex lens). In addition, f3 in Fig. 11 represents a focal length of image pickup lens groups 42R and 42L. In addition, d represents a distance from a principal plane of the first lens group 41-1 of the objective optical system 41 to the subject 52, L represents a distance from the first lens group 41-1 to the second lens group 41-2, M represents a distance between the second lens group 41-2 of the objective optical system 41, and principal planes of the image pickup lens groups 42R and 42L.

In the stereoscopic image pickup apparatus according to the first embodiment, a distance ed of the effective IAD may be made to be smaller than a distance of the physical IAD. In addition, an inclination of an image plane and an inclination of a focus plane are the same as each other, and focusing over an entire screen becomes simple.

In addition, in the image pickup lens groups 42R and 42L, a portion close to an optical axis, that is, a lens center is mainly used, and an optical design as extension of a design in the related art is possible. This has great advantage in the cost compared to a case in which whole configurations are specially designed.

In addition, in the above-described first embodiment, description has been made with respect to a configuration in which all of the first lens group and the second lens group, which make up the objective optical system, are configured by a convex lens or a lens group that may be considered as a convex lens, but it is not limited thereto. For example, the combination of the first lens group and the second lens group may be a combination of a concave lens and a convex lens, or a combination of a convex lens and a concave lens. In a case where the first lens group is configured by a concave lens, since a back-side focal position is present at the side of the object in relation to a back-side principal plane of the concave lens, the second lens group is configured by a convex lens so that the back-side focal position and a front-side focal position of the second lens group are substantially the same as each other. In addition, in a case where the second lens group is configured by a concave lens, the first lens group is configured by a convex lens. Therefore, either the first lens group or the second lens group, or both of these are configured by a convex lens.

3-2. Second Embodiment (First and second Lens Groups of Objective Optical System are in Confocal Relationship, and Second Lens Group of Objective Optical System and Image Pickup Optical System are in Confocal Relationship)

Next, another effect that is obtained by a configuration in which the two lens groups are disposed as an objective optical system will be described.

In a second embodiment, the objective optical system is configured by two lens groups, and a distance between the objective optical system and the image pickup optical system is set to "(a focal length of a second lens group of the objective optical system) + (a focal length of the image pickup optical system)", and both the objective optical system and the image pickup optical system are made to have the same image pickup planes or focal positions as each other (Condition 2). In addition, when a distance between the two lens groups of the objective optical system is made to be changed to control a convergence offset.

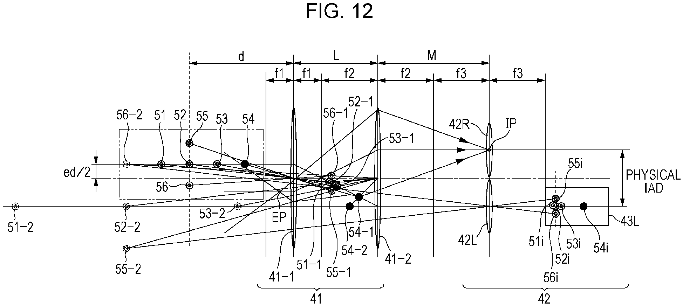

Fig. 12 is a configuration diagram illustrating an overview of the stereoscopic image pickup apparatus according to a second embodiment of the present disclosure.

In the second embodiment, similarly to the first embodiment shown in Fig. 11, in regard to the two-eye type stereoscopic image pickup apparatus, two lens groups are disposed as an objective optical system 41 in front of left and right cameras (image pickup portions) as an image pickup optical system 42. In addition to Condition 1 (the first and second lens groups of the objective optical system are in a confocal relationship) of the first embodiment, a distance between the objective optical system and the image pickup optical system is set to "(a focal length of the second lens group of the objective optical system)+(a focal length of the image pickup optical system)", and both the objective optical system and the image pickup optical system are made to have the same image pickup planes or focal lengths as each other (Condition 2). The objective optical system 41 and the image pickup optical system 42 correspond to the above-described IAD converting portion.

When considering the same subjects 51 to 56 as Fig. 11, in a manner similar to the first embodiment illustrated in Fig. 11, images of the subjects 51 to 56 are imaged at image positions 51i to 56i through the image positions 51-1 to 56-1 and image positions 51-2 to 56-2, respectively.

Since this embodiment satisfies Condition 1, similarly to the first embodiment illustrated in Fig. 11, a light beam that is incident in parallel with the central axis of the objective optical system 41 is refracted by the first lens group 41-1 toward a focal position, and is recovered in parallel by the second lens group 41-2, and then is emitted. Therefore, when considering a light beam that exactly passes through the center (internal pupil IP) of the image pickup lens group of the image pickup optical system 42 after being emitted, a position of an effective pupil EP is present on the light beam (in Fig. 12, a left-side effective pupil is shown in consideration of a visibility of drawing).

A difference between this embodiment (Fig. 12) and the first embodiment (Fig. 11) is that a distance between the objective optical system 41 and the image pickup optical system 42 is enlarged, and a relationship of M=f2+f3 is satisfied. Therefore, in Fig. 12, an ultimate imaging position is deferent from the position shown in Fig. 11.

In addition, in the above-described second embodiment, description has been made with respect to a configuration in which all of the first lens group and the second lens group, which make up the objective optical system, are configured by a convex lens or a lens group that may be considered as a convex lens, but it is not limited thereto. For example, the combination of the first lens group and the second lens group may be a combination of a concave lens and a convex lens, or a combination of a convex lens and a concave lens.

3-3. Third Embodiment (Second Lens Group of Objective Optical System and Image Pickup Optical System are in Confocal Relationship)

However, when a parallel light beam is incident to one lens or a lens group that may be considered equivalently as the one lens, in principle, the light beam converges on one point (or diverges from the one point) on a focal plane. Here, this property may be utilized through a convergence offset control by allowing the relationship of M=f2+f3 to be satisfied.

Fig. 13 is a configuration diagram illustrating an overview of the stereoscopic image pickup apparatus according to a third embodiment of the present disclosure.

In this embodiment, the distance L between the first lens group 41-1 and the second lens group 41-2 of the objective optical system 41 is enlarged, and thereby Condition 1 in the afocal optical system is broken ($L \neq f1+f2$). The objective optical system 41 and the image pickup optical system 42 correspond to the above-described IAD converting portion.

In addition, in Fig. 13, a portion of each lens group through which the light beam does not pass is present, but since this is for the convenience of description of drawing, and with respect to the portion, it is treated as if the light beam passes through the lens group.

When considering the same subjects 51 to 56 as Fig. 11, in a manner similar to the first embodiment illustrated in Fig. 11, images of the subjects 51 to 56 are imaged at image positions 51iB to 56iB through the image positions 51-1 to 56-1 and image positions 51-2' to 56-2', respectively.

In this embodiment, Condition 1 is broken, such that the light beam that is originally emitted to the lens center of the image pickup lens groups 42R and 42L of the image pickup optical system 42 in parallel with the optical axis becomes a light beam that is not parallel with the optical axis. However, between the first lens group 41-1 and the second lens group 41-2, this light beam is a light beam that is parallel with the light beam in the case of satisfying Condition 1, such that the light beam in this embodiment intersects an emitted light beam in the case of satisfying Condition 1 at an intersecting point F on the back-side focal point of the second lens group 41-2.

Here, when the relationship of M=f2+f3 (Condition 2) is satisfied, it is possible to set the intersecting point F to the front-side focal position of the image pickup optical system 42. The light beam that passed through the front-side focal point refracted in the image pickup optical system 42 to a light beam parallel with the optical axis and is vertically incident to the image plane. In a case where the first lens group 41-1 and the second lens group 41-2 of the objective optical system 41 are in a confocal relationship, when being emitted from the objective optical system 41, incident light that passes through the effective pupil EP and is parallel with the image pickup device 43L becomes parallel with a direction of the image pickup device, such that a light beam that passes through the lens center of the image pickup optical system 42 becomes orthogonal to the image pickup plane as it is. Therefore, since the incident light passes through the focal position of the lens group of the image pickup optical system 42 at all times, the distance between the objective optical system 41 and the image pickup optical system 42 and the effective IAD have no relation with each other. Therefore, the position of the effective pupil EP does not vary. As a result, the extension and contraction of the distance L between the first lens group 41-1 and the second lens group 41-2 is possible under a circumstance in which the effective IAD is not changed. Since an angle of incidence to the image pickup optical system 42 may be controlled due to the extension and contraction of the distance L, it is possible to easily control the convergence offset CO while not changing the effective IAD.

In addition, in the above-described third embodiment, description has been made with respect to a configuration in which all of the first lens group and the second lens group, which make up the objective optical system, are configured by a convex lens or a lens group that may be considered as a convex lens, but it is not limited thereto. For example, the combination of the first lens group and the second lens group may be a combination of a concave lens and a convex lens, or a combination of a convex lens and a concave lens.

As described above, in the stereoscopic image pickup apparatus according to the embodiment of the present disclosure, the objective optical system is configured by two lens groups, and has the characteristics of Condition 1 and/or Condition 2.

Of course, even when the objective optical system is configured by three or more lens groups, Condition 2 may be considered.

First, it is considered a case in which a light beam that passes through the effective pupil and is parallel with the direction of the camera in a case where the objective optical system is set to the afocal optical system (it is important to pass through the effective pupil). In a case where the light beam is considered as incident light of the objective optical system, an intersecting point between a light beam that is emitted when the objective optical system is the afocal optical system, and a light beam that is emitted when the objective optical system is broken from the afocal optical system is obtained. A situation in which this intersecting point is on the focal plane of the image pickup optical system corresponds to Condition 2. This is because when the intersecting point is on the focal plane of the image pickup optical system, emitted light of the objective optical system is vertically incident to the image pickup plane through the image pickup optical system, and a light beam that passes through the effective pupil and is parallel with the direction of the camera becomes a light beam that is orthogonal to the image pickup plane. This corresponds to Condition 2 when the objective optical system is configured equivalently by two lens groups.

4. Details of Configuration of Stereoscopic Image Pickup Apparatus According to Embodiment of Present Disclosure

4-1. Description of Condition 1

In Condition 1, in regard to the stereoscopic image pickup apparatus including a plurality of cameras (a plurality of image pickup portions), one objective optical system is disposed at the front side of the plurality of cameras of the image pickup optical system. This objective optical system is configured by at least two lens groups. In addition, there is adopted a configuration (Condition 1) in which a unit, which is capable of setting or controlling focal lengths of three lens groups (the first lens group of the objective optical system, the second lens group of the objective optical system, and the image pickup lens group), or positional relationships between respective lens groups by aligning the two lens groups of the objective optical system and the image pickup lens group provided to each of the plurality of cameras of the image pickup optical system, is provided to solve the problems.

A configuration in which the objective optical system that becomes substantially the afocal optical system is provided represents, in other words, a configuration in which the back-side focal length of the first lens group and the front-side focal length of the second lens group are substantially the same as each other, when it is assumed that the objective optical system includes an object-side first lens group (focal length: f1), and a second lens group (focal length: f2) that is at the side of the plurality of cameras. As a result, in regard to the distance between effective cameras (the distance between the left and right image pickup lens groups) and the effective convergence, the following operation may occur.

Distance Between Effective Cameras

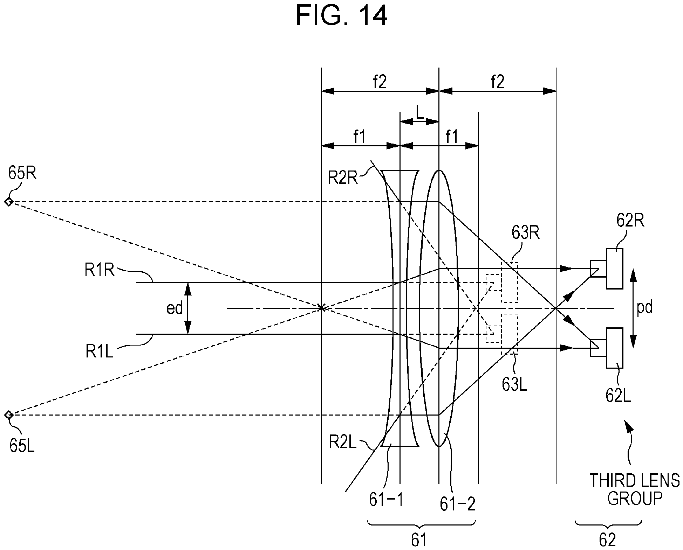

When the objective optical system that becomes substantially the afocal optical system is provided, an optical axis of the objective optical system and optical axes of the plurality of cameras may be collectively changed by substantially f1/f2 times. As shown in Fig. 14, this means that it is possible to effectively change the distance between the cameras by substantially f1/f2 times. That is, at the time of changing the distance between the cameras, it is not necessary to adjust the arrangement of each of the plurality of cameras with high accuracy, and it is possible to adjust the distance between the cameras by attachment or detachment of the objective optical system or a variable power within the objective optical system.

Fig. 14 illustrates a relationship between a distance (physical IAD) between physical cameras and a distance (effective IAD) between effective cameras in the stereoscopic image pickup apparatus according to the first embodiment of the present disclosure, in a case where the objective optical system is configured by a concave lens and a convex lens. In this example, description is made with respect to a configuration in which the objective optical system is configured by the concave lens and convex lens, but the same point of view may be applied to another combination.

A light beam, which is incident from a subject side (the left side in Fig. 14), is refracted by a first lens group 61-1 configured by a concave lens, and a second lens group 61-2 configured by a convex lens, and is incident to physical cameras 62R and 62L. As shown in Fig. 14, when a back-side focal point (an object side in relation to the concave lens) of the first lens group 61-1 of an objective optical system 61, and a front-side focal point of the second lens group 61-2 are made to be the same as each other, light that is condensed with respect to effective cameras 63R and 63L indicated by a broken line is input to the physical cameras 62R and 62L.

As representative two kinds of light beams, light beams R1R and R1L that are parallel with an optical axis, and light beams R2R and R2L that are incident toward the front-side focal point of the first lens group 61-1 (a camera side in relation to the concave lens) are indicated. The light beams R1R and R1L are refracted by the first lens group 61-1 (concave lens) to a direction to be distant from a common focal position, and are incident to the second lens group 61-2, but since the light beams R1R and R1L are light beams from the focal point of the convex lens, the light beams R1R and R1L are again refracted into parallel light beams. Therefore, subject images on the light beams R1R and R1L are projected to image positions 65R and 65L of image pickup lens centers of the physical cameras 62R and 62L by the second lens group 61-2. On the other hand, the light beams R2R and R2L are refracted by the first lens group 61-1 into parallel light beams, and are condensed in focal directions by the second lens group 61-2.

As a result, the light that is condensed to the effective cameras 63R and 63L is condensed to the physical cameras 62R and 62L. An effective IAD ed by the objective optical system 61 of Fig. 14 becomes substantially f1/f2 times a physical IAD pd.

Effective Convergence

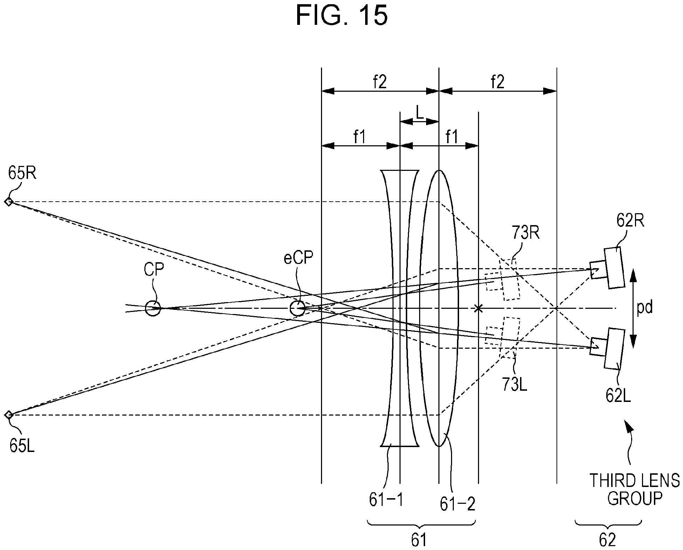

When the objective optical system that becomes substantially afocal optical system is provided, it is possible to change the convergence, which is originally applied in the image pickup optical system, into a very appropriate effective convergence (however, in a case where the optical axis of the image pickup optical system is parallel with an optical axis of the objective optical system, the effective convergence is also parallel). In regard to the convergence, there is a limitation to make the convergence narrow due to a physical restriction of an image pickup lens of a camera, but as shown in Fig. 15, when an objective optical system is provided at the front side of a plurality of camera, it is possible to set a convergence position at a position beyond the physical restriction.

Fig. 15 illustrates a relationship between a physical convergence point and an effective convergence point in the stereoscopic image pickup apparatus according to the first embodiment of the present disclosure, in a case where the objective optical system is configured by the concave lens and the convex lens. In this example, description is made with respect to a configuration in which the objective optical system is configured by a concave lens and a convex lens, but the same point of view may be applied to another combination.

In regard to a convergence angle of the left and right physical cameras 62R and 62L in the image pickup optical system 62, when the objective optical system 61 is provided, a convergence point CP varies and transitions to an effective convergence point eCP, and an effective convergence angle is also changed. A sight line of the convergence direction from each of the physical cameras 62R and 62L is refracted to the optical axis side of the objective optical system 61 by the second lens group 61-2 of the objective optical system 61. In addition, the sight line proceeds toward image positions 65R and 65L of the image pickup lens centers of the physical cameras 62R and 62L by the second lens group 61-2, and proceeds in the direction of a sight line that passes through each of image pickup lens centers of effective cameras 73R and 73L by the first lens group 61-1. As a result, as shown in Fig. 15, the effective convergence point eCP is set to a near position compared to the convergence point CP set by the physical cameras 62R and 62L.

In this manner, the objective optical system 61 with a configuration of a concave lens + a convex lens has a characteristic for close-up photographing in which an image itself is also photographed in a wide angle, such that such things as the convergence point may be adjusted to a relatively close position are related to enlargement in a photographing range and therefore this is effective.

In addition, there is a limitation to make the convergence point close to the physical camera due to a physical restriction, and particularly, this causes a problem at the time of close-up photographing. However, as shown in Fig. 15, since the objective optical system is used, it is possible to set the convergence point to a relative close position.

On the contrary, in a case where the first lens group of the objective optical system is configured by a convex lens, and the second lens group is configured by a concave lens, the effective convergence point is located far away in relation to the physical convergence point.

4-2. Description of Condition 2

In Condition 2, the objective optical system is considered to be configured equivalently by two groups including a first lens group at the side of an object and a second lens group at the side of a plurality of cameras, and the image pickup lens group of the image pickup optical system is considered as a third lens group. In addition, in a case where back-side focal lengths of the first lens group, the second lens group, and the third lens group are set to f1, f2, and f3, respectively, a distance between a back-side principal plane of the first lens group and a front-side principal plane of the second lens group is set to L, and a distance between a back-side principal plane of the second lens group and a front-side principal plane of the third lens group is set to M, f1, f2, f3, L, and M are set to satisfy the following relationship (Condition 2). Description with respect this will be described below in detail.

$$M-f3-f2 \approx 0$$

Distance Between Effective Cameras

Due to Condition 2, the optical axis of the objective optical system and the optical axes of the plurality of cameras may be collectively changed into substantially f1/f2 times, and therefore the distance between cameras may be effectively changed to substantially f1/f2. Furthermore, when a unit to adjust f1 and f2 is provided, the distance between effective cameras may be adjusted.

Effective Convergence

The position of the effective convergence point may be changed by changing the distance L between the back-side principal plane of the first lens group and the front-side principal plane of the second lens group. At this time, in a case where the convergence of the plurality of cameras of the image pickup optical system is set, the convergence point may be further set by changing L.

Furthermore, since the image pickup optical system is a multi-eye stereoscopic image pickup apparatus that independently includes a plurality of cameras, it is possible to perform the photographing while the objective optical system is detached from the apparatus, such that it is possible to perform the photographing using the objective optical system in conformity to a photographing scene or without using the objective optical system. To make the objective optical system detachable, it is preferable that restriction on the image pickup optical system, which is imposed by the objective optical system, be small. In Condition 1 according to the embodiment of the present disclosure, since the restriction is present inside the objective optical system, there is no restriction on the image pickup optical system.

In addition, since the distance between the effective cameras and the effective convergence vary in response to a ratio of the focal length f1 of the first lens group and the focal length f2 of the second lens group of the objective optical system, it is possible to set the distance between the cameras and the convergence in conformity to a photographing scene by controlling the ratio. Specifically, in Condition 2, even in a design in which all of the optical axes of the optical system are parallel with each other and thereby a highly accurate assembling in the manufacturing process may be performed, the convergence may be set by the distance between the first lens group and the second lens group of the objective optical system.

4-3. Relationship Between Subject and Image in Two-Eye Stereoscopic Image Pickup Apparatus

Next, a relationship between a subject and an image in the two-eye type stereoscopic image pickup apparatus in which the convergence point is considered will be described. In the following description, it is illustrated that a stereoscopic image pickup apparatus of a reference as a target is considered, and, the same image pickup result may be obtained in a stereoscopic image pickup apparatus according to an embodiment of the present disclosure.

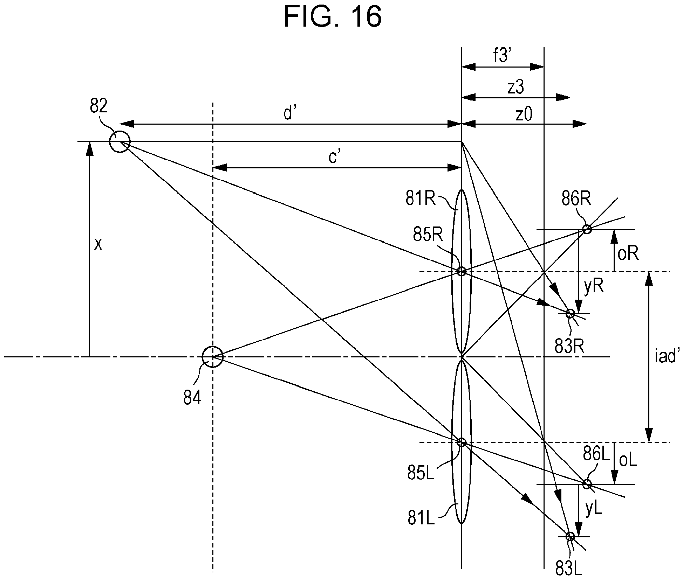

Fig. 16 shows an explanatory diagram illustrating a relationship between a subject and an image in a stereoscopic image pickup apparatus as a reference. In Fig. 16, a portion through which the light beam does not pass is present, but since this is for the convenience of description of drawing, and with respect to the portion, it is treated as if the light beam passes through the lens group. This treatment is also applied with respect to the subsequent drawings when a portion that corresponds to the above-described portion is present.

In the two-eye type stereoscopic image pickup apparatus, image position 83R and 83L of a subject 82, which are generated by two image pickup lenses 81R and 81L, are illustrated. That is, this drawing is a diagram when left and right cameras are seen from an upper side, and illustrates a point at which a light beam, which is emitted from a subject (that is located at a distance d' from image pickup lenses 81R and 81L), is imaged through centers (pupils 85R and 85L) of the image pickup lenses 81R and 81L with respect to each of left and right cameras, in a case where a subject 82 located at a front-right side is photographed.

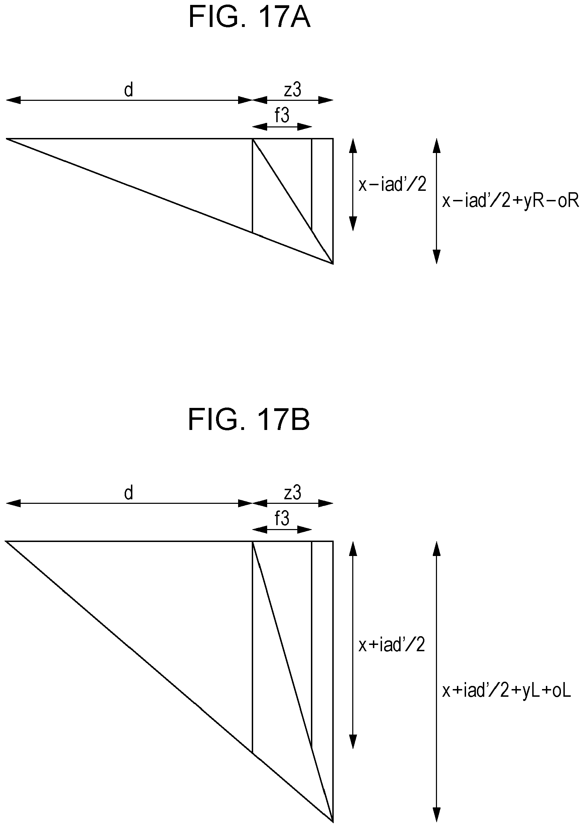

In addition, an on-screen plane (a plane including an on-screen position 84) in which parallax in left and right photographed images becomes zero is set at a distance c' from front-side principal planes of the image pickup lenses 81R and 81L. Shift amounts oR and oL represent that in a case where the on-screen position 84 is set, image positions 86R and 86L corresponding to the on-screen position 84 are how much deviated from optical axes. The image positions 86R and 86L become positions of original points of a left image and a right image, in the case of setting the on-screen position 84. In addition, each of yR and yL represents an amount of deviation of the image positions 83R and 83L of the subject 82 with respect to the original points (image positions 86R and 86L) in a case where the on-screen position 84 is set. z3 represents a distance from the image pickup lenses 81R and 81L to the image positions 83R and 83L. In addition, z0 represents a distance from the image pickup lenses 81R and 81L to the image positions 86R and 86L. Figs. 17A and 17B are obtained by drawing these distance relationships with a homologous triangle with respect to respective left and right cameras. From these relationships, imaging coordinates (yR, yL) are expressed by formula (1-1) and formula (1-2).

$$yR = \{x-(iad'/2)\}\frac{f3'}{d'-f3'} + (iad'/2)\frac{f3'}{c'-f3'} \quad \cdots \quad (1-1)$$

$$yL = \{x+(iad'/2)\}\frac{f3'}{d'-f3'} - (iad'/2)\frac{f3'}{c'-f3'} \quad \cdots \quad (1-2)$$

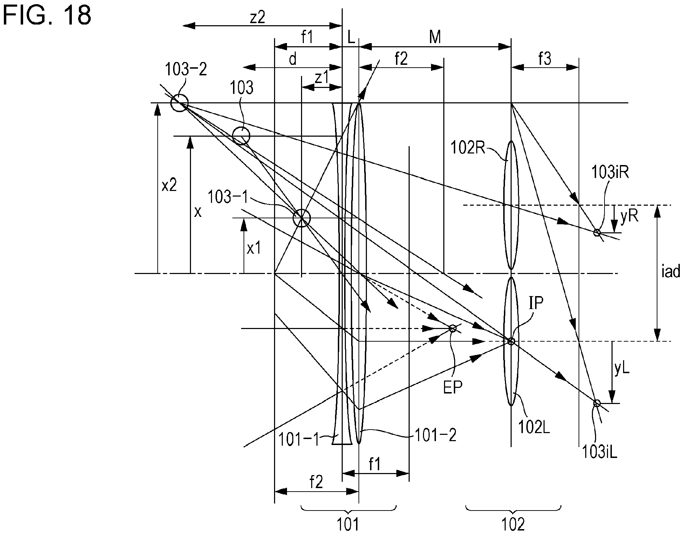

These imaging coordinates are calculated from a position (x, d') of the subject 82 using a distance (iad') between cameras, a focal length (f3'), and an on-screen position (c') as parameters. These parameters are called stereoscopic photographing parameters. Of course, imaging coordinates in the two-eye type stereoscopic image pickup apparatus are expressed based on this formula, and this formula is considered as a reference of Figs. 18 to 20.

Here, in a case where the on-screen position 84 is set to infinite distance, the image positions 83R and 83L, which are located at distances of the shift amounts oR and oL from the original points, are located on central axes of the left and right image pickup lenses 81R and 81L. At this time, even when the on-screen position 84 is moved, the distances between the central axes of the image pickup lenses 81R and 81L and the image positions 83R and 83L do not vary. In a case where the on-screen position 84 is infinite distance, since the distance c' to the on-screen position is infinitely distant, a second term in each formulae (1-1) and (1-2) with respect to yR and yL becomes zero. In a case where c' is finite, as c' becomes close to a camera, the image positions 83R and 83L that are distant from the original points by the shift amounts oR and oL becomes far away from the central axes of the image pickup lenses 81R and 81L, yR becomes large, and yL becomes small.

In the related art, to adjust the on-screen position 84, a method in which a read-out position of a pixel with respect to left and right image pickup devices is deviated, or positions of the image pickup devices are vertically deviated from optical axes by the shift amounts oR and oL, and thereby central positions of read-out images are deviated was adopted. In addition, in the related art, a correction to remove a keystone distortion is made by performing the photographing in a state in which the left and right cameras are set to have a crossed eye, that is, the optical axes of the left and right cameras are made to intersect each other. However, in the stereoscopic image pickup apparatus according to this embodiment of the present disclosure, it is possible to easily set the distance between the effective cameras and the effective convergence without changing physical relative positions of a plurality of cameras.

4-4. Relationship Between Subject and Image in a Case Where Concave Lens is Disposed as First Lens Group of Objective Optical System According to Embodiment of Present Disclosure, and Convex Lens is Disposed as Second Lens Group

Fig. 18 illustrates a relationship between a subject and an image in the stereoscopic image pickup apparatus according to the first embodiment of the present disclosure, in a case where a concave lens is disposed as the first lens group of the objective optical system, and a convex lens is disposed as the second lens group.

A focal length of a concave lens of a first lens group 101-1 is set to f1, a focal length of a convex lens of a second lens group 101-2 is set to f2, a focal length of a convex lens of a third lens group (image pickup lens groups 102R and 102L in an image pickup optical system 102) is set to f3, a distance between a back-side principal plane of the first lens group 101-1 and a front-side principal plane of the second lens group 101-2 is set to L, and a distance between a back-side principal plane of the second lens group 101-2 and a front-side principal plane of the third lens group is set to M.

In this example, coordinates of a virtual image position 103-1 of a subject 103 by the concave lens of the first lens group 101-1 is (x1, z1), and coordinates of a virtual image position 103-2 of the virtual image position 103-1 by the convex lens of the second lens group 101-2 is (x2, z2). In addition, the virtual image position 103-2 is imaged at image positions 103iR and 103iL by the convex lenses of the third lens group (image pickup lens groups 102R and 102L). In this case, imaging coordinates (yR, yL), at which the subject 103 located at a position of (x, d) in the drawing are ultimately imaged, in left and right images are expressed by formulae (2-1) and (2-2).

$$yR = \left\{ x-(iad/2)\frac{f1*f2}{(M-f3-f2)(f2-f1-L)+f2*f2} \right\} \frac{f3'}{d'-f3'} +(iad/2)\frac{(L+f1-f2)f3'}{f1*f2} \quad \cdots \quad (2-1)$$

$$yL = \left\{ x+(iad/2)\frac{f1*f2}{(M-f3-f2)(f2-f1-L)+f2*f2} \right\} \frac{f3'}{d'-f3'} -(iad/2)\frac{(L+f1-f2)f3'}{f1*f2} \quad \cdots \quad (2-2)$$

$$f3' = \frac{f1((f2+f3)L+(f2-L)M)}{\dfrac{f1*f2*f3}{(M-f3-f2)(f2-f1-L)+f2*f2}} \quad \cdots \quad (4)$$

(Here, d' represents an effective subject distance, f3' represents an effective focal length). This illustrates that in a case where the optical system of Fig. 18 is expressed by two lenses of left and right synthesizing and imaging lenses similarly to Fig. 16, a distance from a principal plane of each of the synthesizing and imaging lenses to the subject 103 becomes d', and a focal length of each of the synthesizing and imaging lenses is considered as f3'.

In addition, in formulae (2-1) and (2-2), a term of formula 5 is a half of the distance between effective cameras, and represents that, the distance between the effective cameras may be changed by changing f1, f2, f3, L, and M with respect to the distance (iad) between physical cameras.

$$(iad/2)\frac{f1*f2}{(M-f3-f2)(f2-f1-L)+f2*f2} \quad \cdots \quad (5)$$

In addition, in formulae (2-1) and (2-2), a term of formula 6 is a term that determines an effective on-screen position (in a case where a plurality of cameras of the image pickup optical system are arranged in parallel with each other).

$$(iad/2)\frac{(L+f1-f2)f3'}{f1*f2} \quad \cdots \quad (6)$$

From formulae (1-1) and (1-2), and formulae (2-1) and (2-2), a relationship between iad' and iad may be expressed by formula (7).

$$(iad'/2) = (iad/2)\frac{f1*f2}{(M-f3-f2)(f2-f1-L)+f2*f2} \quad \cdots \quad (7)$$

From this formula (7), formula (8) is derived, and the on-screen position c' may be expressed by formula (9).

$$(iad/2)\frac{f1*f2}{(M-f3-f2)(L-f1-f2)+f2*f2} \cdot \frac{f3'}{(c'-f3')} = (iad/2)\frac{(L+f1-f2)f3'}{f1*f2} \quad \cdots \quad (8)$$

$$c' = f3' + \frac{f1*f2*f1*f2}{(L+f1-f2)(M-f3-f2)(f2-f1-L)+f2*f2} \quad \cdots \quad (9)$$

In this example, with respect to each term of the above-described calculation formulae, controls described below are performed for easy use.

(1) Increase attachment and detachment easiness between the objective optical system and the image pickup optical system.

When considering the attachment and detachment between the objective optical system 101 and the image pickup optical system 102, it is preferable that even when M, which is a distance between the back-side principal plane of the second lens group 101-2 and the front-side principal plane of the third lens group (image pickup lens groups 102R and 102L), slightly vary, this variation have no effect on the distance iad' between the effective cameras, the effective focal length f3', and the effective on-screen position.

Here, when a relationship of f2-f1-L=0 is made to be satisfied, all of these stereoscopic photographing parameters do not depend on M. Therefore, in a case where the objective optical system 101 is mounted, it is possible to make a variation in the optical axis direction not be sensed. Therefore, it is useful to make the relationship of f2-f1-L=0 be substantially satisfied. When f2-f1-L=0, the first lens group 101-1 and the second lens group 101-2 of the objective optical system 101 have the same focal position as each other, such that Condition 1 is satisfied.

(2) Make a control of the effective on-screen position easy.

a) When a plurality of cameras of the image pickup optical system 102 are arranged in parallel with the optical axis, Condition 1 is necessary so that the effective on-screen position does not vary even when the objective optical system 101 is mounted.

b) Change the effective on-screen position without changing the distance iad' between the effective cameras or the effective focal length f3'.

This may be realized by changing the convergence of the plurality of cameras of the image pickup optical system 102, but when a relationship of M-f3-f2=0 is made to be satisfied, the variation of L may have no relation with the distance iad' between the effective cameras and the effective focal length f3' without changing the convergence of the plurality of cameras. Therefore, it is possible to adjust the effective on-screen position by changing L after the distance between the effective cameras and the effective focal length are set. The condition of M-f3-f2=0 means that the second lens group 101-2 (the objective optical system 101) and the third lens group (the image pickup lens groups 102R and 102L of the image pickup optical system 102) have the same focal position as each other, and Condition 2 is satisfied.

As described above, when the objective optical system and the image pickup optical system are disposed and set to satisfy either Condition 1 or Condition 2, it is possible to change the distance between the effective cameras and a depth position that gives a zero parallax in a more simple manner.

4-5. Relationship Between Subject and Image in a Case Where Convex Lens is Disposed as First Lens Group of Objective Optical System According to Embodiment of Present Disclosure, and Convex Lens is Disposed as Second Lens Group

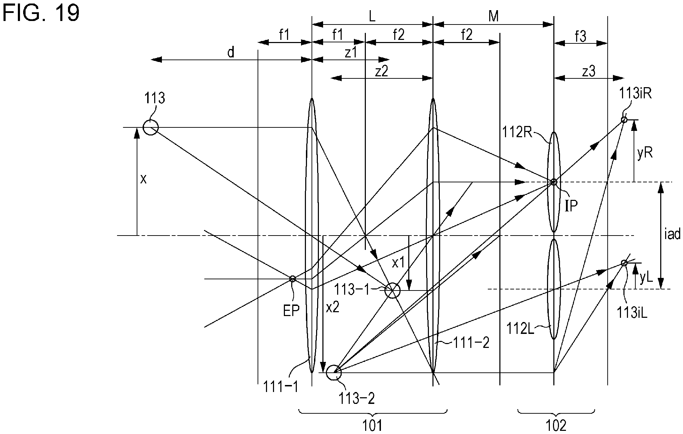

Fig. 19 illustrates a relationship between a subject and an image in the stereoscopic image pickup apparatus according to the first embodiment of the present disclosure, in a case where a convex lens is disposed as the first lens group of the objective optical system, and a convex lens is provided as the second lens group thereof.

A focal length of a convex lens of a first lens group 111-1 is set to f1, a focal length of a convex lens of a second lens group 111-2 is set to f2, a focal length of a convex lens of a third lens group (image pickup lens groups 112R and 112L in an image pickup optical system 112) is set to f3, a distance between a back-side principal plane of the first lens group 111-1 and a front-side principal plane of the second lens group 111-2 is set to L, and a distance between a back-side principal plane of the second lens group 111-2 and a front-side principal plane of the third lens group (image pickup lens groups 112R and 112L) is set to M.

In this example, coordinates of a image position 113-1 of a subject 113 by the convex lens of the first lens group 111-1 is (x1, z1), and coordinates of an image position 113-2 of the image position 113-1 by the convex lens of the second lens group 111-2 is (x2, z2). In addition, the image position 113-2 is imaged at image positions 113iR and 113iL by the convex lenses of the third lens group (image pickup lens groups 112R and 112L). In this case, imaging coordinates (yR, yL), at which the subject 113 located at a position of (x, d) in the drawing are ultimately imaged, in left and right images are expressed by formulae (10-1) and (10-2).

$$yR = -\left\{x-(iad/2)\frac{f1*f2}{(M-f3-f2)(L-f1-f2)-f2*f2}\right\}\frac{f3'}{d'-f3'} + (iad/2)\frac{(L-f1-f2)f3'}{f1*f2} \quad \cdots \quad (10-1)$$

$$yL = -\left\{x+(iad/2)\frac{f1*f2}{(M-f3-f2)(L-f1-f2)-f2*f2}\right\}\frac{f3'}{d'-f3'} - (iad/2)\frac{(L-f1-f2)f3'}{f1*f2} \quad \cdots \quad (10-2)$$

However,

$$d' = d + \frac{f1\{(f2+f3)L+(f2-L)M\}}{(M-f3-f2)(L-f1-f2)-f2*f2} \quad \cdots \quad (11)$$

$$f3' = \frac{f1*f2*f3}{(M-f3-f2)(L-f1-f2)-f2*f2} \quad \cdots \quad (12)$$

In this configuration, with respect to each term of the above-described calculation formulae, controls described below are performed for easy use.

(1) Increase attachment and detachment easiness between the objective optical system and the image pickup optical system.

When considering the attachment and detachment between the objective optical system 111 and the image pickup optical system 112, it is preferable that even when M, which is a distance between the back-side principal plane of the second lens group 111-2 and the front-side principal plane of the third lens group (image pickup lens groups 112R and 112L), slightly vary, this variation have no effect on the distance iad' between the effective cameras, the effective focal length f3', and the effective on-screen position.

Here, when a relationship of L-f1-f2=0 is made to be satisfied, all of these stereoscopic photographing parameters do not depend on M. Therefore, in a case where the objective optical system 111 is mounted, it is possible to make a variation in the optical axis direction not be sensed. Therefore, it is useful to make the relationship of L-f1-f2=0 be substantially satisfied. When L-f1-f2=0, the first lens group 111-1 and the second lens group 111-2 of the objective optical system 111 have the same focal position as each other, such that Condition 1 is satisfied (however, symbols of focal lengths of the concave lens and the convex lens are different from each other).

(2) Make a control of the effective on-screen position easy.

a) When a plurality of cameras of the image pickup optical system 112 are arranged in parallel with the optical axis, Condition 1 is necessary so that the effective on-screen position does not vary even when the objective optical system 111 is mounted.
b) Change the effective on-screen position without changing the distance iad' between the effective cameras or the effective focal length f3'.

This may be realized by changing the convergence of the plurality of cameras of the image pickup optical system 112, but when a relationship of M-f3-f2=0 is made to be satisfied, the variation of L may have no relation with the distance iad' between the effective cameras and the effective focal length f3' without changing the convergence of the plurality of cameras. Therefore, only the effective on-screen position may be controlled. As a result, it is possible to adjust the effective on-screen position by changing L after the distance between the effective cameras and the effective focal length are set. The condition of M-f3-f2=0 means that the second lens group 111-2 (the objective optical system 111) and the third lens group (the image pickup lens groups 112R and 112L of the image pickup optical system 112) have the same focal position as each other, and Condition 2 is satisfied.

4-6. Relationship Between Subject and Image in a Case Where Convex Lens is Disposed as First Lens Group of Objective Optical System According to Embodiment of Present Disclosure, and Concave Lens is Disposed as Second Lens Group

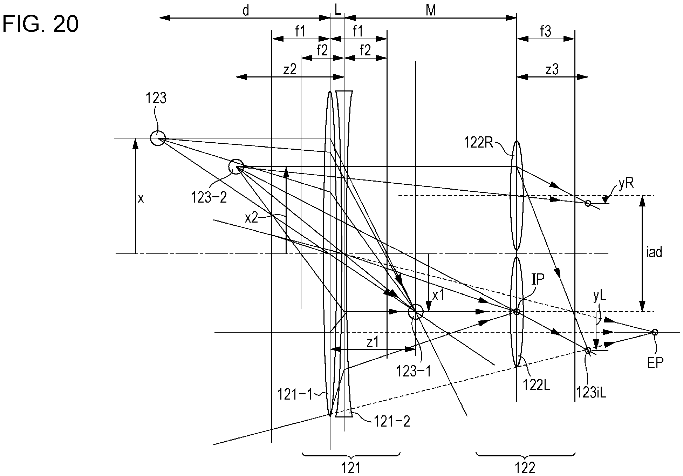

Fig. 20 illustrates a relationship between a subject and an image in the stereoscopic image pickup apparatus according to the first embodiment of the present disclosure, in a case where a convex lens is disposed as the first lens group of the objective optical system, and a concave lens is disposed as the second lens group.

A focal length of a convex lens of a first lens group 121-1 is set to f1, a focal length of a concave lens of a second lens group 121-2 is set to f2, a focal length of a concave lens of a third lens group (image pickup lens groups 122R and 122L in an image pickup optical system 122) is set to f3, a distance between a back-side principal plane of the first lens group 121-1 and a front-side principal plane of the second lens group 121-2 is set to L, and a distance between a back-side principal plane of the second lens group 121-2 and a front-side principal plane of the third lens group (image pickup lens groups 122R and 122L) is set to M.

In this example, coordinates of a image position 123-1 of a subject 123 by the convex lens of the first lens group 121-1 is (x1, z1), and coordinates of an image position 123-2 of the image position 123-1 by the concave lens of the second lens group 121-2 is (x2, z2). In addition, the image position 123-2 is imaged at image positions 123iR and 123iL by the convex lenses of the third lens group (image pickup lens groups 122R and 122L). In this example, a distance between effective pupils EP that is an effective IAD becomes larger than a distance iad between internal pupils IP that is a physical IAD. In this case, imaging coordinates (yR, yL), at which the subject 123 located at a position of (x, d) in the drawing are ultimately imaged, in left and right images are expressed by formulae (13-1) and (13-2).

$$yR = \{( x-(iad/2) \frac{f1*f2}{((M-f3+f2)(f1-L-f2)+f2*f2)} \} \frac{f3'}{d'-f3'} - (iad/2) \frac{(f1-L-f2)f3'}{f1*f2} \quad \cdots \quad (13-1)$$

$$yL = \{( x+(iad/2) \frac{f1*f2}{((M-f3+f2)(f1-L-f2)+f2*f2)} \} \frac{f3'}{d'-f3'} + (iad/2) \frac{(f1-L-f2)f3'}{f1*f2} \quad \cdots \quad (13-2)$$

However,

$$d' = d + \frac{f1\{(f2-f3)L+(L+f2)M\}}{(M-f3+f2)(f1-L-f2)+f2*f2} \quad \cdots \quad (14)$$

$$f3' = \frac{f1*f2*f3}{(M-f3+f2)(f1-L-f2)+f2*f2} \quad \cdots \quad (15)$$

In this configuration, with respect to each term of the above-described calculation formulae, controls described below are performed for easy use.

(1) Increase attachment and detachment easiness between the objective optical system and the image pickup optical system.

When considering the attachment and detachment between the objective optical system 121 and the image pickup optical system 122, it is preferable that even when M, which is a distance between the back-side principal plane of the second lens group 121-2 and the front-side principal plane of the third lens group (image pickup lens groups 122R and 122L), slightly vary, this variation have no effect on the distance iad' between the effective cameras, the effective focal length f3', and the effective on-screen position.

Here, when a relationship of f1-L-f2=0 is made to be satisfied, all of these stereoscopic photographing parameters do not depend on M. Therefore, in a case where the objective optical system 121 is mounted, it is possible to make a variation in the optical axis direction not be sensed. Therefore, it is useful to make the relationship of f1-L-f2=0 be substantially satisfied. When f1-L-f2=0, the first lens group 121-1 and the second lens group 121-2 of the objective optical system 121 have the same focal position as each other, such that Condition 1 is satisfied (however, symbols of focal lengths of the convex lens and the concave lens are different from each other).

(2) Make a control of the effective on-screen position easy.

**[0148]**

　　　　a) When a plurality of cameras of the image pickup optical system 122 are arranged in parallel with the optical axis, Condition 1 is necessary so that the effective on-screen position does not vary even when the objective optical system 121 is mounted.
　　　　b) Change the effective on-screen position without changing the distance iad' between the effective cameras or the effective focal length f3'.

This may be realized by changing the convergence of the plurality of cameras of the image pickup optical system 122, but when a relationship of M-f3+f2=0 is made to be satisfied, the variation of L may have no relation with the distance iad' between the effective cameras and the effective focal length f3' without changing the convergence of the plurality of cameras, such that only the effective on-screen position may be controlled. Therefore, it is possible to adjust the effective on-screen position by changing L after the distance between the effective cameras and the effective focal length are set. The condition of M-f3+f2=0 means that the second lens group 121-2 (the objective optical system 121) and the third lens group (the image pickup lens groups 122R and 122L of the image pickup optical system 122) have the same focal position as each other, and Condition 2 is satisfied (however, symbols of focal lengths of the convex lens and the concave lens are different from each other).

4-7. Calculation Formula at the Time of Being Applied to Intersecting Method

Here, a case in which the above-described calculation formulae are applied to the intersecting method will be described.

In a case where the photographing of the plurality of cameras of the image pickup optical system is performed by the intersecting method (on-screen position is infinite) not the paralleling method, formula (6) becomes Mathematical Formula 16.

$$(iad/2)\frac{(L+f1-f2)f3'}{f1*f2} + (iad/2)\frac{f3}{c-f3} \quad \cdots \quad (16)$$

(However, c represents a distance from a front-side principal plane of the image pickup optical system)

Therefore, formulae (2-1) and (2-2) may be modified like the following formula.

$$yR = \left\{ x-(iad/2)\frac{f1*f2}{(M-f3-f2)(f2-f1-L)+f2*f2} \right\} \frac{f3'}{d'-f3'} + (iad/2)\frac{(L+f1-f2)f3}{f1*f2}$$
$$+(iad/2)\frac{f3}{c-f3} \cdots (17-1)$$

$$yL = \left\{ x+(iad/2)\frac{f1*f2}{(M-f3-f2)(f2-f1-L)+f2*f2} \right\} \frac{f3'}{d'-f3'} - (iad/2)\frac{(L+f1-f2)f3}{f1*f2}$$
$$-(iad/2)\frac{f3}{c-f3} \cdots (17-2)$$

The convergence is applied in a state in which the objective optical system is not mounted in the stereoscopic image pickup apparatus, and in a case where a position that is distant from the image pickup optical system by a distance c is set as the on-screen position, a right term of formula (16) is added to the calculation formula of formula (6). This can be understood from formulae (1-1) and (1-2) illustrated with reference Fig. 16. In a state in which the convergence is applied, when the objective optical system is mounted, a left term of formula (16) is added.

According to this embodiment, in regard to the image pickup optical system provided with the plurality of cameras, the objective optical system is combined, such that it is possible to change the distance between the effective cameras and a depth position that gives the effective convergence (zero parallax) without changing the physical position between the plurality of cameras of the image pickup optical system.

For example, the change of the distance between the effective cameras by the objective optical system has no relation with the distance M between the focal points of the image pickup lens group of the image pickup optical system and the second lens group of the objective optical system. Therefore, the distance between the cameras may be changed by adding the objective optical system (conversion lens) as an attachment (an auxiliary part) to an image pickup optical system in the related art.

In addition, when changing the convergence point, the effective convergence point may be moved only by adjusting the distance of the first lens group and the second lens group of the objective optical system.

5. Block Configuration of Stereoscopic Image Pickup Apparatus According to Embodiment of Present Disclosure

5-1. Configuration Example Corresponding to Condition 1

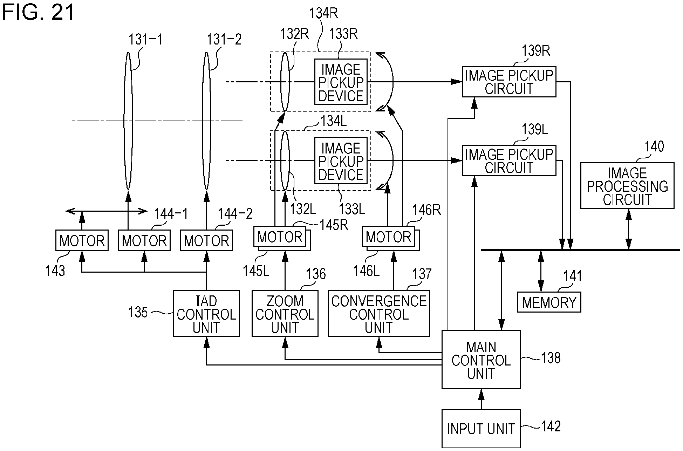

Fig. 21 shows a block diagram illustrating a configuration example (corresponding to Condition 1) of the stereoscopic image pickup apparatus according to an embodiment of the present disclosure. Here, a block, which is necessary for an electromotive control of the distance between cameras, and the image pickup process is illustrated.

The stereoscopic image pickup apparatus according to this example includes an objective optical system having a first lens group 131-1 and a second lens group 131-2, and left and right cameras 134R and 134L (image pickup optical system) including image pickup lens groups 132R and 132L, and image pickup devices 133R and 133L, respectively. In addition, the stereoscopic image pickup apparatus includes an image pickup circuits 139R and 139L to which an image signal obtained by the image pickup devices 133R and 133L, an image processing circuit 140, a nonvolatile memory 141, a main control unit 138, and an input unit 142, and these are connected in a communication manner to each other via a bus. Furthermore, the stereoscopic image pickup apparatus includes an IAD control unit 135, a zoom control unit 136, a convergence control unit 137, motors 143, 144-1, 144-2, 145R, 145L, 146R, and 146L.

The IAD control unit 135 is a control mechanism to adjust the distance between the effective cameras, and drives the motors 144-1 and 144-2 under a control of the main control unit 138. Therefore, an adjustment of the focal lengths of the first lens group 131-1 and the second lens group 131-2 of the objective optical system is performed, and thereby a desired distance between the effective cameras. In addition, through the position adjustment of the first lens group 131-1, a control is performed in such a manner that Condition 1 (the first lens group and the second lens group of the objective optical system are in a confocal relationship) in the embodiments of the present disclosure is satisfied. The focal length adjustment of the lens group is performed by minutely controlling a position of each of the lenses making up the lens group.

In regard to the image pickup optical system, the zoom control unit 136 drives the motor 145R and 145L under a control of the main control unit 138, and thereby performs the focal length control with respect to the image pickup lens groups 132R and 132L.

In regard to the adjustment of a depth position at which parallax becomes zero, this may be countermeasured in such a manner that the convergence control unit 137 drives the motors 146R and 146L under a control of the main control unit 138, and thereby directions (a distance between cameras or an optical axis direction) of individual cameras 134R and 134L in the image pickup optical system. At this time, only the image pickup lens groups 132R and 132L, only the image pickup devices 133R and 133L, or all of the left and right cameras 134R and 134L may be made to move.

Photographed images, which can be obtained by the left and right image pickup devices 133R and 133L through the objective optical system (the first lens group 131-1 and the second lens group 131-2) and the image pickup optical system (the cameras 134R and 134L), are converted into image signals, and then this converted signals are input to corresponding image pickup circuits 139R and 139L. In the image pickup circuits 139R and 139L, for example, a focusing, an aperture stop, a gain adjustment, a detection process called a white balance are performed, and then the photographed images are stored in the memory 141 by the main control unit 138. In addition, although not shown in this drawing, among results of the detection process, parameters necessary for feedback may be feedback for a photographing setting.

In the image processing circuit 140, an individual process with respect to an individual camera image, or an image process over a plurality of cameras may be performed.

The main control unit 138 is an example of a control unit that is in charge of an overall control, and performs a predetermined calculation process based on an operation input signal that is output by the input unit 142 according to an operation input, or based on a program stored in the memory 141.

In this example, the two-eye type stereoscopic image pickup apparatus is illustrated, but it is not particularly limited to the two-eye type. In addition, the first lens group and the second lens group of the objective optical system are indicated as a convex lens, but another lens combination described in this specification is also effective. Details of a variable focal length mechanism of a lens group representing each optical system block is not described, but it is not limited to a specific mechanism at the time of applying the present disclosure. In addition, in this example, description has been made with respect to an example of an electromotive control using motors, but a mechanical mechanism satisfying Condition 1 according to the embodiment of the present disclosure may be provided.

5-2. Configuration Example Corresponding to Condition 2

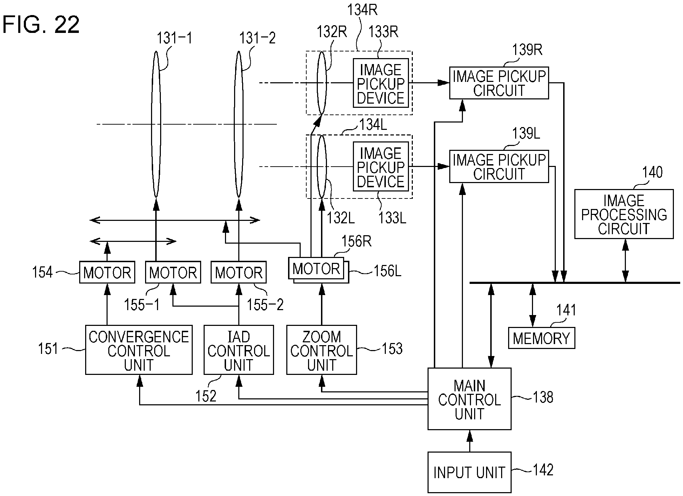

Fig. 22 shows a block diagram illustrating another configuration example (corresponding to Condition 2) of the stereoscopic image pickup apparatus according to an embodiment of the present disclosure. Here, a block, which is necessary for an electromotive control of a distance between cameras and a depth position at which parallax becomes zero and the image pickup process, is illustrated. In Fig. 22, description with respect to parts that are common to the configuration of Fig. 21 will be omitted.

The zoom control unit 153 drives motors 156R and 156L under a control of the main control unit 138, and controls a distance between the second lens group 131-2 of the objective optical system and the image pickup lens groups 132R and 132L of the image pickup optical system in such a manner that Condition 2 (the second lens group of the objective optical system and the image pickup optical system are in a confocal relationship) in embodiment of the present disclosure is satisfied. An example of Fig. 22 illustrates a control to allow the second lens group 131-2 of the objective optical system and the image pickup lens groups 132R and 132L of the image pickup optical system to be in a confocal relationship by moving the entirety of the objective optical system, but it is not particularly limited thereto as long as it is a mechanism satisfying Condition 2. An adjustment of image size on a display screen is performed after the distance between the effective cameras is set through the zoom adjustment. In addition, a configuration of Fig. 22 may be controlled so as to satisfy Condition 1.

The IAD control unit 152 is a control mechanism to control the distance between the effective cameras, and drives motors 155-1 and 155-2 under a control of the main control unit 138, and thereby a focal length adjustment of the first lens group 131-1 and the second lens group 131-2 of the objective optical system is performed to obtain a desired distance between the effective cameras.

In regard to the adjustment of a depth position at which parallax becomes zero, a convergence control unit 151 drives a motor 154 under a control of the main control unit 138 and thereby a position of the first lens group 131-1 is adjusted to be a desired depth position. At this time, direction of the plurality of cameras (the image pickup lens groups 132R and 132L, and the image pickup devices 133R and 133L) in the image pickup optical system may be parallel with the optical axis direction of the objective optical system. Since any convergence is provided, and this is synthesized with a convergence of the objective optical system, the setting may be performed by calculating a synthesized convergence. As a method of providing the convergence, a method in which a read-out position of a pixel with respect to left and right image pickup devices is deviated, a method in which positions of the image pickup devices are shifted in a direction orthogonal to optical axes, and thereby central positions of read-out images are deviated, or the like may be exemplified.

In the above-described configuration, in a case where Condition 2 is satisfied, an adjustment of a distance between the effective cameras in the objective optical system and a depth position at which parallax becomes zero may be performed.

In addition, in the convergence control unit 137 of Fig. 21, a control to change a direction of each of the cameras 134R and 134L is performed, but the zoom control unit 153 of this example may perform a control to change a direction of each of the cameras 134R and 134L. In addition, in this example, description has been made with respect to an example in which an electromotive control using the motors is performed, but a mechanical mechanism satisfying Condition 2 of the embodiment of the present disclosure may be provided. In addition to this, a modification example similarly to that is exemplified in the description of the configuration shown in Fig. 21 may be applied.

In a naked-eye stereoscopic display or the like, when images that are photographed by a stereoscopic image pickup apparatus of a multi-eye as well as a two-eye are displayed, a motion stereo vision corresponding to a movement of a head portion, which is difficult in the two-eye type alone, or the like is possible. Accompanying this, it is expected that a chance of performing the photographing with the multi-eye stereoscopic image pickup apparatus increases. The embodiment of the present disclosure may also be applied to a multi-eye case as well as a two-eye case, and shows a further effect in relation to the adjustment in the multi-eye stereoscopic image pickup apparatus. When the embodiment of the present disclosure is used, it is possible to adjust the distance between the effective cameras and the convergence without changing a physical arrangement of the plurality of cameras, such that it is possible to the adjustment operation of an individual camera, which is increased along with an increase in the number of cameras, in a simple and accurate manner.

5-3. Configuration Example in Which Objective Optical System is Configured by Detachable Convergence Lens

The objective optical system according to the embodiment of the present disclosure may be assembled into a multi-eye stereoscopic image pickup apparatus, as well as may be used as a type in which the objective optical system is mounted as a conversion lens at the front of an existing multi-eye stereoscopic image pickup apparatus. A conversion lens including at least two lens groups is configured to be detachable with respective to the stereoscopic image pickup apparatus, and the conversion lens is used as the objective optical system in the stereoscopic image pickup apparatus according to the embodiment of the present disclosure.

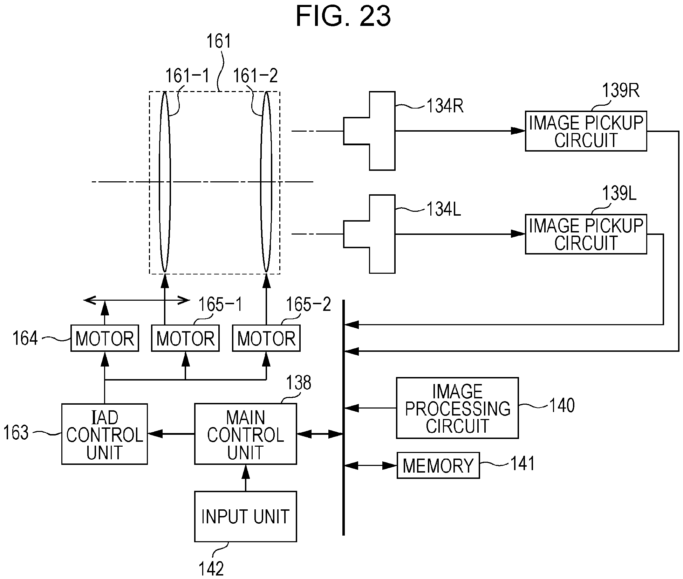

Fig. 23 shows a block diagram illustrating a configuration example in the stereoscopic image pickup apparatus according to an embodiment of the present disclosure, in a case where the objective optical system is utilized as a detachable conversion lens. The example of Fig. 23 is an example that is capable of controlling the distance between the effective cameras in an electromotive manner and illustrates a block that is necessary for this control. For example, description corresponding to the zoom control unit 136 and the convergence control unit 137 of Fig. 21 is omitted.

A conversion lens 161 is configured to include a first lens group 161-1 and a second lens group 161-2, and functions as the objective optical system according to the embodiment of the present disclosure. On the other hand, the stereoscopic image pickup apparatus in this example includes an IAD control unit 163 that controls a focal position or the like of the first lens group 161-1 and the second lens group 161-2 of the conversion lens 161 that is mounted.

The IAD control unit 163 drives a motor 164, 165-1, and 165-2 under a control of the main control unit 138, and performs a focal length adjustment of the first lens group 161-1 and the second lens group 161-2 of the conversion lens 161, and a position adjustment of the first lens group 161-1. In this manner, the IAD control unit 163 perform the control in such a manner that Condition 1 (the first lens group and the second lens group of the objective optical system is a confocal relationship) according to the embodiment of the present disclosure is satisfied.

There is no restriction with respect to the distance between the image pickup optical system and the objective optical system in Condition 1 according to the embodiment of the present disclosure, such that the embodiment of the present disclosure is applicable as a conversion lens with respect to existing multi-eye stereoscopic image pickup apparatus.

In addition, in this example, description has been made with respect to an example in which an electromotive control using a motor is performed, but a mechanical mechanism satisfying Condition 1 according to the embodiment of the present disclosure may be provided.

In addition, it may be designed in such a manner that Condition 2 (the second lens group of the objective optical system and the image pickup optical system are in a confocal relationship) according to the embodiment of the present disclosure is satisfied when the conversion lens 161 is mounted in the stereoscopic image pickup apparatus. In addition to this, a modification example similarly to that is exemplified in the description of the configuration shown in Figs. 21 and 22 may be applied.

5-4. Configuration Example in Which Objective Optical System is Configured by Convergence Lens Having Fixed Focal Length

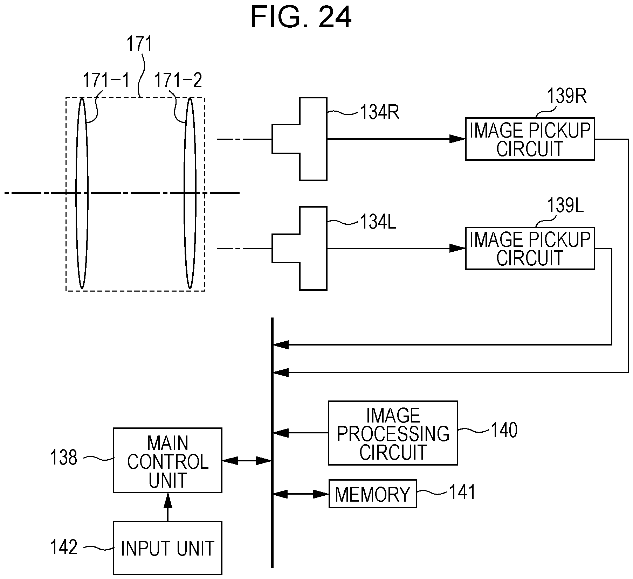

Fig. 24 shows a block diagram illustrating a configuration example in the stereoscopic image pickup apparatus according to an embodiment of the present disclosure, in a case where the objective optical system is utilized as a conversion lens in which a focal length is fixed.

A conversion lens 171 that functions as the objective optical system according to the embodiment of the present disclosure is configured to include a first lens group 171-1 and a second lens group 171-2. In the conversion lens 171, a fixed focal length is designed in such a manner that Condition 1 (the first lens group and the second lens group of the objective optical system are in a confocal relationship) according to the embodiment of the present disclosure is satisfied.

In a case where Condition 1 according to the embodiment of the present disclosure is satisfied, since there is no restriction in a distance between the objective optical system and the image pickup optical system, the conversion lens 171 may be provided in a type in which only the conversion lens (objective optical system) is added to an existing multi-eye stereoscopic image pickup apparatus. As a simple example, the conversion lens 171 may be provided as a conversion lens in such a manner that focal lengths of the first lens group and the second lens group of the objective optical system are fixed, and a distance between the effective cameras is enlarged (reduced) with a constant magnification.

In addition, it may be designed in such a manner that Condition 2 (the second lens group of the objective optical system and the image pickup optical system are in a confocal relationship) according to the embodiment of the present disclosure is satisfied when the conversion lens 171 is mounted in the stereoscopic image pickup apparatus. In addition, in Fig. 24, the first lens group 171-1 and the second lens group 171-2 of the objective optical system are illustrated as a convex lens, but another lens combination described in this specification is also effective.

As described above, according to the embodiment of the present disclosure, when the embodiment of the present disclosure is applied with respect to the multi-eye stereoscopic image pickup apparatus provided with a plurality of cameras in which an arbitrary distance between cameras and a convergence are set as the image pickup optical system, the distance between cameras and the convergence may be changed without being restricted by a restriction of a physical position of a plurality of cameras.

In addition, when the embodiment of the present disclosure is used, the adjustment of the distance between the effective cameras or the adjustment of the convergence may be performed by the objective optical system provided at the front of the plurality of cameras. Therefore, since the adjustment of the distance between cameras or the adjustment of the convergence may be performed without adjusting a position of an individual camera for each photographing, it is possible to realize a reduction in an adjustment time before initiating the photographing, or simplification of an interlocking mechanism in the multi-eye stereoscopic image pickup apparatus (Condition 1).

Furthermore, in the objective optical system according to the embodiment of the present disclosure, the adjustment of the effective convergence may be performed by controlling only L in the objective optical system by a lens shift mechanism after performing the adjustment of the distance between the effective cameras. Therefore, it is possible to realize simplification of a user's operation or a lens control mechanism in a case where the adjustment of the convergence is performed after the distance between the effective cameras is set in a photographing scene in which the distance between the effective cameras is constant or the like (Condition 2).

6. Configuration Example of Objective Optical System Configured by Three Lens Groups

Next, an objective optical system configured by three groups will be described while being compared with an example in the related art.

First, a technology disclosed in Japanese Unexamined Patent Application Publication No. 2003-5313 will be described. It is considered that in Japanese Unexamined Patent Application Publication No. 2003-5313, in a case where a zoom ratio is classified into a zoom ratio in the objective optical system and a zoom ratio in the image pickup optical system, and when a magnification of one side is made to increase, a magnification of other side is made to decrease to make an entire magnification constant, an operation in which a stereoscopic effect varies is obtained. At this point of time, it is configured in such a manner that the IAD and the convergence focus vary concurrently. A technology to separately control the IAD and the convergence is not disclosed.

In this specification, a control of the IAD and a control of the convergence after determining the IAD, which are important items of stereoscopic vision are disclosed.

(1) Disclosure of a technology of converting the IAD to have a desired value by controlling the IAD

The desired IAD is obtained by making the IAD variable, or by switching the objective optical system with the IAD fixed. As means for realizing this configuration, an afocal optical system is disposed in front of a plurality of cameras.

The IAD is a concept related to the plurality of cameras, and in this embodiment of the present disclosure, the control of the IAD is performed. This is basically different from a configuration in which a conversion lens is displaced in front of a single camera.

(2) Disclosure of a technology in which a control of the convergence is performed after determining the IAD

There is disclosed a technology about what to do so as to make the convergence vary while the IAD is maintained.
As means for realizing this, a configuration in which two lens groups of the objective optical system and the image pickup optical system are made to have the same focal plane as each other, and then a configuration of the objective optical system that is an afocal optical system is broken may be exemplified. In addition, even when the objective optical system is not configured by two groups, when considering the objective optical system as a lens that is configured by equivalent two groups, the embodiment of the present disclosure may be applied.

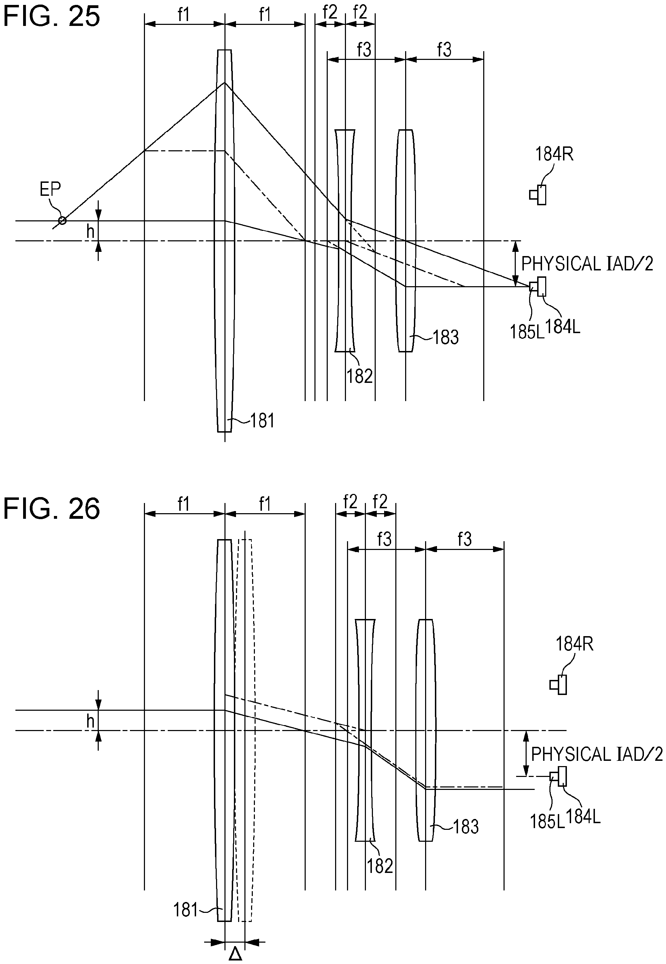

Fig. 25 shows an explanatory diagram illustrating an example in the stereoscopic image pickup apparatus according to an embodiment of the present disclosure, in a case where the objective optical system is configured by three lens groups. A pupil shown in Figs. 25 to 28 is a pupil in the case of using the objective optical system, such that this pupil is a pupil that is considered as an internal pupil. However, here, the setting of the convergence position is not performed, such that this pupil is the same as a pupil when excluding the objective optical system.
In this drawing, it is illustrated that the objective optical system configured by first to third lens groups 181 to 183 perform the IAD conversion with an afocal optical system. Focal lengths of the first to third lens groups 181 to 183 are f1, f2, and f3. A light beam, which passes through the pupils of the physical cameras 184R and 184L and is orthogonal to an image plane, is parallel with a direction of a physical camera even when the light beam passes the afocal optical system. Therefore, pupils that are on lens center axes of physical cameras 184R and 184L, and an effective pupil EP that is an image by the objective optical system function as pupils of the two-eye stereoscopic image pickup apparatus. Therefore, a distance ed/2 between a light beam, which passes through the effective pupil EP parallel with a direction of the cameras, and a center line of the left and right physical cameras 184R and 184L becomes an effective IAD/2. As can be seen from drawing, the distance ed of the effective IAD is converted to be smaller than a distance iad of the physical IAD.
Fig. 26 illustrates a shape of the objective optical system at the time of a focus adjustment illustrated in Japanese Unexamined Patent Application Publication No. 2003-5313.
Fig. 26 illustrates that an incident light beam shown in Fig. 25 proceeds in which manner at the time of the focus adjustment. When the first lens group 181 is made to move toward a subject side by a length $\Delta$, a magnification of the objective optical system varies and the condition of the afocal optical system is broken, such that the objective optical system is no longer the afocal optical system. Therefore, the light beam (Fig. 25), which passes through the pupil of the image pickup optical system (the physical camera 184L) and is orthogonal to the image plane in a case where the objective optical system becomes the afocal optical system, is deviated from the pupil and thereby an angle with the image plane also varies. As a result, the IAD that is an important control element of the stereoscopic vision varies. Specifically, a natural stereoscopic effect is described in Japanese Unexamined Patent Application Publication No. 2003-5313, but a background of the natural stereoscopic effect is not disclosed.

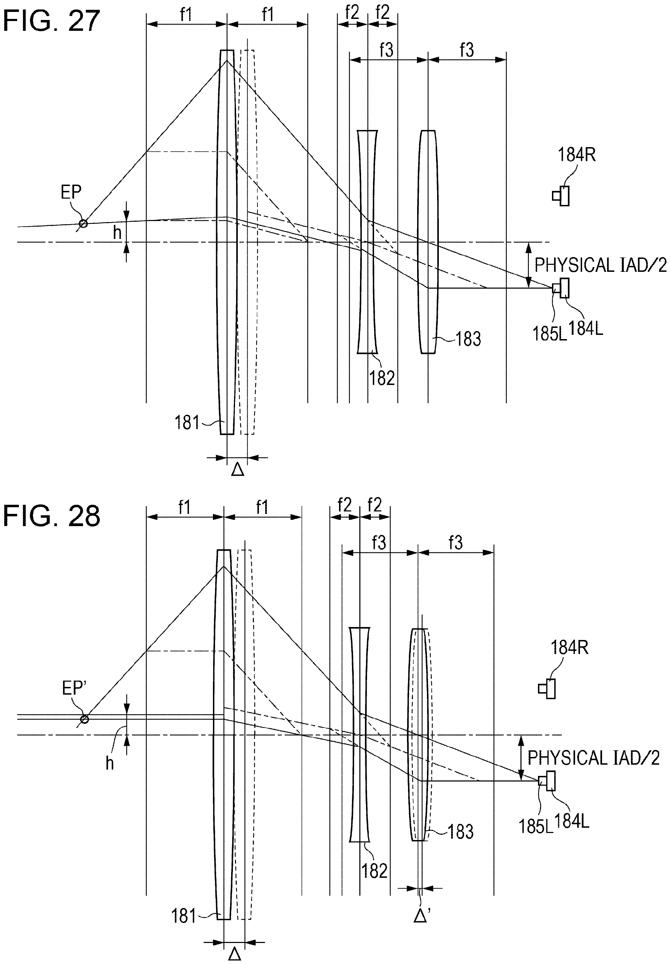

Fig. 27 illustrates an incidence direction of a light beam that passes through a pupil of a physical camera, which is orthogonal to an image plane, in the objective optical system in Fig. 26.
As shown in this drawing, a position of the effective pupil of Fig. 25 is made to move, and an incidence direction is made to be different from that of the center axis of the objective optical system. As a result, the IAD varies and the convergence also varies. As described in this specification, when it is attempted to change the convergence while not changing the IAD, since a condition exists in the objective optical system and the image pickup optical system, it is difficult to control the IAD and the convergence in order for these to be a desired state by only technical details disclosed in Japanese Unexamined Patent Application Publication No. 2003-5313.
Fig. 28 shows an explanatory diagram illustrating an IAD control in the stereoscopic image pickup apparatus according to an embodiment of the present disclosure.
Even when the condition is not provided to the image pickup optical system, it is possible to control the IAD when the control is performed in such a manner that the objective optical system satisfies the condition of the afocal optical system similarly to the embodiment of the present disclosure. That is, it is possible to control a conversion ratio of effective IAD/physical IAD. According to a technology of the embodiment of the present disclosure, as shown in Fig. 28, when the movement of the first lens group 181 shown in Fig. 26 is controlled in conjunction with the third lens group 183 that is located at a third position from a subject side, it is possible to realize the control of the objective optical system, which is aimed at the control of the IAD. In this example, a distance of the effective IAD/2 at the time of the effective pupil EP' becomes shorter than the distance h of the effective IAD/2 before the focus adjustment. In addition, the objective optical system shown in Fig. 28 is an example of the objective optical system according to the embodiment of the present disclosure, but it is not limited to this configuration in the case of a variable magnification.

Japanese Unexamined Patent Application Publication No. 2003-5313 discloses that the focus adjustment is performed through the lens control of Fig. 26 and the stereoscopic effect varies. Contrary to this, the focus adjustment in this optical system according to the embodiment of the present disclosure may be solved by performing the focus adjustment at least in the image pickup optical system.

As described above, the objective optical system, which is used in the stereoscopic image pickup apparatus according to the embodiment of the present disclosure, may be configured by at least two lens groups. In addition, the image pickup optical system may be configured by at least one image pickup lens group.

In addition to this, the stereoscopic image pickup apparatus according to the embodiment of the present disclosure may be applied to not only the stereoscopic image pickup apparatus but also a distance measuring apparatus. Even in the distance measuring apparatus, when the distance between the effective cameras and the convergence can be changed without being restricted by restriction of the physical position of the plurality of cameras, this is very effective for the distance measurement. For example, when the effective IAD is made to be large, an estimated measurement distance becomes long, and on the contrary, when the effective IAD is made to be small, the estimated measurement distance becomes short. Therefore, when the effective IAD is adjusted and is set to a large value, measurement accuracy may be improved.

In addition, the present disclosure may have the following configurations.

(1) A stereoscopic image pickup apparatus including an objective optical system of an afocal optical system, which includes two or more lens groups that form a subject as a real image or a virtual image and that are disposed on the same optical axis;

a plurality of image pickup optical systems that allow a plurality of subject light beams, which are emitted from different paths of the objective optical system, to be imaged as independent images, respectively, by a plurality of independent lens groups; and

a plurality of image pickup devices that are provided in correspondence with the plurality of image pickup optical systems, and that convert the images, which are imaged by the plurality of image pickup optical systems, to image signals.

(2) The stereoscopic image pickup apparatus according to item (1), wherein in a case where the objective optical system is equivalently configured by two lens groups, a lens group that is at the side of the image pickup optical system among the lens groups of the objective optical system, and each lens group of the image pickup optical system is made to have the same focal plane as each other, and a distance on an optical axis between a subject-side lens group of the objective optical system and the image pickup optical system-side lens group is changed.

(3) The stereoscopic image pickup apparatus according to item (1), wherein in a case where the objective optical system is equivalently configured by two lens groups, a first lens group and a second lens group have the same focal plane as each other.

(4) The stereoscopic image pickup apparatus according to item (3), wherein in a state in which the first lens group and the second lens group have the same focal plane as each other, the second lens group that is at the side of the image pickup optical system among the lens groups of the objective optical system, and each optical system of the image pickup optical system has the same focal plane as each other.

(5) The stereoscopic image pickup apparatus according to any one of items (1) to (4), further including a control unit that performs a first control to make the first lens group and the second lens group have the same focal point as each other by changing the distance on the optical axis between the first lens group and the second lens group.

(6) The stereoscopic image pickup apparatus according to any one of items (1) to (5), further including a control unit that performs a second control to change a distance between effective image pickup optical systems by changing a focal length of each lens group of the objective optical system and changing a magnification of the objective optical system.

(7) The stereoscopic image pickup apparatus according to any one of items (2) to (6), further including a control unit that performs a third control to make a second lens group that is at the side of the image pickup optical system among the lens groups of the objective optical system, and each optical system of the image pickup optical system has the same focal plane as each other.

(8) The stereoscopic image pickup apparatus according to any one of items (2) to (7), wherein the control unit further includes a control unit that performs a fourth control to change a distance on an optical axis between a first lens group and a second lens group in the objective optical system, in a state in which a second lens group that is at the side of the image pickup optical system among the lens groups of the objective optical system, and each lens group of the image pickup optical system has the same focal plane as each other.

(9) The stereoscopic image pickup apparatus according to any one of items (2) to (8), wherein when it is assumed that each of a first lens group and a second lens group of the objective optical system is one lens, a combination of the first lens group and the second lens group includes a combination of a convex lens and a convex lens, a combination of a convex lens and a concave lens, and a combination of a concave lens and a convex lens.

(10) The stereoscopic image pickup apparatus according to any one of items (1) to (9), wherein the objective optical system is configured to be detachable with respect to the stereoscopic image pickup apparatus.

(11) A stereoscopic image pickup method at the time of performing a stereoscopic image pickup by a stereoscopic image pickup apparatus including an objective optical system of an afocal optical system, which includes two or more lens groups that form a subject as a real image or a virtual image and that are disposed on the same optical axis, a plurality of image pickup optical systems that allow a plurality of subject light beams, which are emitted from different paths of the objective optical system, to be imaged as independent images, respectively, by a plurality of independent lens groups, and a plurality of image pickup devices that are provided in correspondence with the plurality of image pickup optical systems, and that convert the images, which are imaged by the plurality of image pickup optical systems, to image signals,

wherein the objective optical system is set as an afocal optical system by changing a focal length of each lens group of the objective optical system, and a distance on an optical axis between the respective lens groups, and

a distance between effective image pickup optical systems is changed by changing a magnification of the objective optical system.

The present disclosure contains subject matter related to that disclosed in Japanese Priority Patent Application JP 2011-081306 filed in the Japan Patent Office on March 31, 2011, the entire contents of which are hereby incorporated by reference.

It should be understood by those skilled in the art that various modifications, combinations, sub-combinations and alterations may occur depending on design requirements and other factors insofar as they are within the scope of the appended claims.

**Claims**

1. A stereoscopic image pickup apparatus, comprising:

   an objective optical system of an afocal optical system, which includes two or more lens groups that form a subject as a real image or a virtual image and that are disposed on the same optical axis;

   a plurality of image pickup optical systems that allow a plurality of subject light beams, which are emitted from different paths of the objective optical system, to be imaged as independent images, respectively, by a plurality of independent lens groups; and

   a plurality of image pickup devices that are provided in correspondence with the plurality of image pickup optical systems, and that convert the images, which are imaged by the plurality of image pickup optical systems, to image signals.

2. The stereoscopic image pickup apparatus according to Claim 1,
   wherein in a case where the objective optical system is equivalently configured by two lens groups, a lens group that is at the side of the image pickup optical system among the lens groups of the objective optical system, and each lens group of the image pickup optical system is made to have the same focal plane as each other, and a distance on an optical axis between a subject-side lens group of the objective optical system and the image pickup optical system-side lens group is changed.

3. The stereoscopic image pickup apparatus according to Claim 1,
   wherein in a case where the objective optical system is equivalently configured by two lens groups, a first lens group and a second lens group have the same focal plane as each other.

4. The stereoscopic image pickup apparatus according to Claim 3,
   wherein in a state in which the first lens group and the second lens group have the same focal plane as each other, the second lens group that is at the side of the image pickup optical system among the lens groups of the objective optical system, and each optical system of the image pickup optical system has the same focal plane as each other.

5. The stereoscopic image pickup apparatus according to Claim 3, further comprising:

   a control unit that performs a first control to make the first lens group and the second lens group have the same focal point as each other by changing the distance on the optical axis between the first lens group and the second lens group.

27

**6.** The stereoscopic image pickup apparatus according to Claim 1, further comprising:

a control unit that performs a second control to change a distance between effective image pickup optical systems by changing a focal length of each lens group of the objective optical system and changing a magnification of the objective optical system.

**7.** The stereoscopic image pickup apparatus according to Claim 2, further comprising:

a control unit that performs a third control to make a second lens group that is at the side of the image pickup optical system among the lens groups of the objective optical system, and each optical system of the image pickup optical system has the same focal plane as each other.

**8.** The stereoscopic image pickup apparatus according to Claim 2,
wherein the control unit further includes a control unit that performs a third control to change a distance on an optical axis between a first lens group and a second lens group in the objective optical system, in a state in which a second lens group that is at the side of the image pickup optical system among the lens groups of the objective optical system, and each lens group of the image pickup optical system has the same focal plane as each other.

**9.** The stereoscopic image pickup apparatus according to Claim 2,
wherein when it is assumed that each of a first lens group and a second lens group of the objective optical system is one lens, a combination of the first lens group and the second lens group includes a combination of a convex lens and a convex lens, a combination of a convex lens and a concave lens, and a combination of a concave lens and a convex lens.

**10.** The stereoscopic image pickup apparatus according to Claim 1,
wherein the objective optical system is configured to be detachable with respect to the stereoscopic image pickup apparatus.

**11.** A stereoscopic image pickup method at the time of performing a stereoscopic image pickup by a stereoscopic image pickup apparatus including an objective optical system of an afocal optical system, which includes two or more lens groups that form a subject as a real image or a virtual image and that are disposed on the same optical axis, a plurality of image pickup optical systems that allow a plurality of subject light beams, which are emitted from different paths of the objective optical system, to be imaged as independent images, respectively, by a plurality of independent lens groups, and a plurality of image pickup devices that are provided in correspondence with the plurality of image pickup optical systems, and that convert the images, which are imaged by the plurality of image pickup optical systems, to image signals,
wherein the objective optical system is set as an afocal optical system by changing a focal length of each lens group of the objective optical system, and a distance on an optical axis between the respective lens groups, and
a distance between effective image pickup optical systems is changed by changing a magnification of the objective optical system.

# FIG. 1A

# FIG. 1B

# FIG. 2

# FIG. 3A

# FIG. 3B

# FIG. 4

## FIG. 5

## FIG. 6

FIG. 7

FIG. 8

# FIG. 9

# FIG. 10

# FIG. 11

# FIG. 12

FIG. 13

# FIG. 14

FIG. 15

# FIG. 16

# FIG. 17A

# FIG. 17B

FIG. 18

FIG. 19

FIG. 20

FIG. 21

FIG. 22

## FIG. 23

# FIG. 24

171

171-1  171-2

134R

134L

IMAGE PICKUP CIRCUIT — 139R

IMAGE PICKUP CIRCUIT — 139L

138 — MAIN CONTROL UNIT

142 — INPUT UNIT

IMAGE PROCESSING CIRCUIT — 140

MEMORY — 141

FIG. 25

FIG. 26

FIG. 27

FIG. 28

FIG. 29

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003 A
- JP 5313 A
- JP 2003005313 A
- JP 2011081306 A